# EUROPÄISCHE PATENTSCHRIFT

(11) **EP 1 529 145 B1**
(45) Veröffentlichungstag und Bekanntmachung des Hinweises auf die Patenterteilung: **08.03.2006**
(21) Anmeldenummer: 03783951.1
(22) Anmeldetag: 04.08.2003
(51) Int. Cl.: E05F 11/38

(54) **VERSTELLANTRIEB**
SERVO DRIVE
SERVORCOMMANDE

(30) Priorität: 02.08.2002 DE 10236372
(43) Veröffentlichungstag der Anmeldung: 11.05.2005
(73) Patentinhaber: Brose Fahrzeugteile GmbH & Co. KG, Coburg, 96450 Coburg (DE)
(72) Erfinder: BÖRNCHEN, Thomas, 96052 Bamberg (DE); EISENTRAUDT, Michael, 96342 Stockheim-Neukenroth (DE); KLIPPERT, Uwe, 36280 Oberaula (DE); SALHOFF, Thomas, 96523 Hallstadt (DE); SESSELMANN, Helmut, 96103 Hallstadt (DE); SOMMER, Uwe, 96528 Effelder (DE); STAMMBERGER, Werner, 96253 Weissenbrunn am Forst (DE); STENZEL, Manfred, 96049 Bamberg (DE); MÜLLER, Joachim, 97453 Schonungen (DE)
(74) Vertreter: Ninnemann, Detlef
(86) Internationale Anmeldenummer: PCT/DE2003/002615
(87) Internationale Veröffentlichungsnummer: WO 2004/015306

(56) Entgegenhaltungen:
- EP-A- 0 012 250
- EP-A- 1 137 153
- DE-A- 4 128 257
- DE-A- 19 708 310
- US-A- 3 930 566

## Beschreibung

Die Erfindung betrifft einen Verstellantrieb nach dem Oberbegriff des Anspruchs 1.

Ein derartiger Verstellantrieb umfasst einen elektromechanischen (insbesondere elektromagnetomechanischen) Energiewandler mit einem drehbar gelagerten Scheibenläufer zur Erzeugung eines Drehmomentes; einen dem Scheibenläufer nachgeschalteten Übersetzungsmechanismus zur Kopplung des Scheibenläufers mit einem Abtriebselement unter gleichzeitiger Übersetzung (insbesondere in Form einer sogenannten Untersetzung) des am Scheibenläufer wirkenden Drehmomentes; sowie einen Sperrmechanismus, der unter der Wirkung eines abtriebsseitig in den Verstellantrieb eingeleiteten Drehmomentes eine Drehbewegung des Abtriebselementes sperrt und die Übertragung des abtriebsseitig eingeleiteten Drehmomentes auf die Antriebseite, d. h. zum Scheibenläufer, verhindert.

Unter einem Scheibenläufer wird dabei eine flache Ankerscheibe verstanden, deren Durchmesser deutlich größer ist als deren Höhe (axiale Ausdehnung).

"Sperren" einer (Dreh-)Bewegung des Abtriebselementes bedeutet, dass bei abtriebsseitiger Einleitung eines Drehmomentes lediglich eine geringfügige, begrenzte Bewegung des Abtriebselementes in dem Umfang möglich sein soll, der für ein Aktivieren der Sperrmittel erforderlich ist, aber keine substanziell darüber hinausgehende Bewegung des Abtriebselementes. Mit anderen Worten ausgedrückt, wird eine (Dreh)-Bewegung des Abtriebselementes verhindert, soweit sie substanziell über eine zum Betätigen bzw. Schalten (Aktivieren) des Sperrmechanismus erforderliche begrenzte Bewegung hinausgeht; insbesondere wird also durch den Sperrmechanismus verhindert, dass sich das Abtriebselement unter der Einwirkung eines abtriebsseitig eingeleiteten Drehmomentes (um mehrere Umdrehungen) frei drehen kann, wie es bei antriebsseitiger Einleitung eines Drehmomentes (über den Scheibenläufer) der Fall ist. Die mit der abtriebsseitigen Einleitung eines Drehmomentes verbundene Energie wird dabei z.B. vom Sperrmechanismus aufgenommen.

Der Sperrmechanismus muss hierfür nicht am Abtriebselement selbst angreifen sondern kann z.B. auch auf ein Getriebeelement des Übersetzungsmechanismus einwirken. Entscheidend ist allein, dass ein abtriebsseitig eingeleitetes Drehmoment an einer geeigneten Stelle des Verstellantriebs gesperrt wird, so dass es keine substanzielle Verstellbewegung der Elemente des Verstellantriebs (insbesondere nicht des Abtriebselementes) auslösen kann.

Der Übersetzungsmechanismus kann im Grenzfall auch die Übersetzung 1 : 1 aufweisen und wirkt dann als ein reiner Koppelmechanismus zur Drehmomentübertragung zwischen Scheibenläufer und Abtriebselement; er kann in diesem Fall in einfacher Weise durch an dem Scheibenläufer (insbesondere an dessen Umfang) angeordnete Koppelemente gebildet werden, die zur Kraft- bzw. Drehmomentübertragung auf das Abtriebselement einwirken.

Unter der "abtriebsseitigen Einleitung" eines Drehmomentes in den Verstellantrieb wird die Einleitung eines Drehmomentes über ein Element verstanden, dass dem Abtriebselement abtriebsseitig nachgeordnet ist, dass also (von der Antriebsseite, d.h. vom Scheibenläufer, her gesehen) im Kraft- bzw. Drehmomentfluss hinter dem Abtriebselement liegt, wie z.B. eine Seiltrommel, die als Bestandteil eines Verstellmechanismus eines Fensterhebers hinter dem Abtriebselement angeordnet ist und durch dieses angetrieben wird.

Ein derartiger Verstellantrieb eignet sich insbesondere zur Einstellung von Verstellteilen in Kraftfahrzeugen. Hierzu ist das entsprechende Verstellteil des Kraftfahrzeugs mit dem Abtriebselement des Verstellantriebs gekoppelt. Bei Verwendung des Verstellantriebs in einem Kraftfahrzeugfensterheber zum Anheben und Absenken einer Fensterscheibe kann das Abtriebselement des Verstellantriebs beispielsweise mit einer Seiltrommel verbunden sein, um die ein Antriebsseil als Zugmittel des Kraftfahrzeugfensterhebers geschlungen ist. Der Verstellantrieb dient dann zur Erzeugung einer Drehbewegung der mit dem Abtriebselement verbundenen Seiltrommel, welche wiederum eine Bewegung des als Zugmittel dienenden Antriebseiles bewirkt, mittels dem die zu verstellende Fensterscheibe angehoben bzw. abgesenkt wird.

Durch die Verwendung eines sogenannten Scheibenläufers, d. h. einer Ankerscheibe, in dem elektromechanischen Energiewandler, der auf der Grundlage des elektromotorischen Prinzips das für die Betätigung des Abtriebselementes erforderliche Drehmoment zur Verfügung stellt, wird ein flacher Aufbau des Verstellantriebs angestrebt, entsprechend dem geringen Raum, der in Kraftfahrzeugtüren üblicherweise für die Unterbringung eines Verstellantriebs zur Verfügung steht. Mittels des zwischen dem Scheibenläufer und dem Abtriebselement vorgesehenen Übersetzungsmechanismus erfolgt dabei, insbesondere bei der Anwendung des Verstellantriebs zur Einstellung von Verstellteilen in Kraftfahrzeugen, eine sogenannte Untersetzung, d. h., das Abtriebselement dreht sich mit einer kleineren Drehzahl als der Scheibenläufer und stellt dementsprechend ein größeres Drehmoment zur Einstellung des entsprechenden Verstellteiles, wie z. B. einer Fensterscheibe, zur Verfügung.

Bei derartigen Verstellsystemen ist von großer Bedeutung, dass ein abtriebseitig eingeleitetes Drehmoment nicht zur Antriebseite übertragen wird bzw. zu keiner substanziellen Drehbewegung am Abtriebselement führt. So soll beispielsweise verhindert werden, dass sich eine Fensterscheibe eines Kraftfahrzeugs dadurch absenken lässt, dass auf die Fensterscheibe selbst eine hinreichend große Kraft ausgeübt wird. Wird die Übertragung eines solchen abtriebseitig eingeleiteten Drehmomentes zur Antriebseite des Verstellantriebs nicht verhindert, so ließe sich die Fensterscheibe durch auf die Fensterscheibe selbst aufgebrachte Kräfte absenken, wobei sich der Scheibenläufer entlang einer Richtung drehte, die einem Absenken der Fensterscheibe entspricht.

Es ist bekannt, eine solche Rückwirkung abtriebsseitig aufgebrachter Verstellkräfte auf die Antriebsseite durch eine selbsthemmende Auslegung eines Antriebssystems zu verhindern. Dies hat jedoch den Nachteil, dass der Wirkungsgrad des Verstellantriebs reduziert wird.

Eine weitere Möglichkeit besteht darin, zusätzliche Sperrmittel zu verwenden, die bei Einleitung eines abtriebsseitigen Drehmomentes in den Verstellantrieb aktiviert werden und hierbei auf ein Element des Verstellantriebs derart einwirken, dass dieses arretiert ist und eine Übertragung des Drehmomentes auf die Antriebsseite verhindert. Hierbei besteht jedoch das Problem, dass die zusätzlichen Sperrmittel zusätzlichen Raumbedarf nach sich ziehen und daher einen möglichst kompakten Aufbau des Verstellantriebs in axialer Richtung entgegenstehen können.

Der Erfindung liegt daher das Problem zugrunde, einen Verstellantrieb der eingangs genannten Art zu schaffen, der sich bei möglichst großem Wirkungsgrad durch einen kompakten Aufbau, insbesondere in axialer Richtung auszeichnet.

Dieses Problem wird erfindungsgemäß durch die Schaffung eines Verstellantriebs mit den Merkmalen des Anspruchs 1 gelöst.

Danach dient als Sperrmechanismus zur Vermeidung der Übertragung eines abtriebseitig eingeleiteten Drehmomentes auf die Antriebseite des Verstellantriebs und damit zur Sperrung einer Drehbewegung des Abtriebselementes eine Schlingfeder, deren Windungen sich am äußeren Umfang des Übersetzungsmechanismus und/oder des Scheibeläufers des Verstellantriebs erstrecken.

Die erfindungsgemäße Lösung beruht auf der Erkenntnis, dass bei einem Verstellantrieb der eingangs genannten Art geeignete Sperrmittel, die weder zu einer signifikanten Reduzierung des Wirkungsgrades im normalen Verstellbetrieb führen, noch eine spürbare Vergrößerung der axialen Ausdehnung des Verstellantriebs zur Folge haben, dadurch zur Verfügung gestellt werden können, dass die Sperrmittel sich (ausschließlich) am äußeren Umfang des Übersetzungsmechanismus bzw. des Scheibenläufers des Verstellantriebs erstrecken, diesen also sozusagen umfassen, und gleichzeitig eine möglichst geringe Ausdehnung in axialer Richtung aufweisen. Dieses Kriterium wird durch eine Schlingfeder als Sperrmittel erfüllt, die den Übersetzungsmechanismus des Verstellantriebs ringartig umgibt.

Mit dem erfindungsgemäßen Verstellantrieb lässt sich - je nach dessen konkreter Ausbildung im Einzelfall - neben der flachen Bauweise und einen hohen Wirkungsgrad eine Vielzahl weiterer wichtiger Vorteile erzielen: So lässt sich eine Schlingfeder in einfacher Weise betätigen, um bei Einleitung eines abtriebseitigen Drehmomentes eine Sperrwirkung zur Verfügung zu stellen und umgekehrt bei Einleitung eines antriebseitigen Drehmomentes, zur Erzeugung einer gewünschten Verstellbewegung, die Sperrwirkung aufzuheben, wobei gleichzeitig ein symmetrischer Aufbau des Verstellgetriebes, beispielsweise im Hinblick auf dessen Verwendbarkeit sowohl in fahrerseitigen als auch in beifahrerseitigen Fahrzeugtüren möglich ist. Ferner lässt sich eine durch eine Schlingfeder ausgebildete Sperre so ausbilden, dass das Abtriebselement nur ein geringes Rücksetzverhalten unter der Einwirkung eines abtriebseitigen Drehmomentes aufweist. Dies ist bei Verwendung des Verstellantriebs in einem Kraftfahrzeugfensterheber im Hinblick auf die Einbruchsicherheit von großer Bedeutung. Gleichzeitig lässt sich die Belastung des Verstellantriebs, vor allem des Übersetzungsmechanismus, aufgrund des Eigengewichts des entsprechenden Verstellteiles (z. B. einer Fensterscheibe) bzw. aufgrund einer elastischen Vorspannung des Verstellteiles (z. B. aufgrund einer auf die Scheibenoberkante einwirkenden Scheibendichtung) im stromlosen Zustand minimieren. Dadurch werden beispielsweise Verformungs- bzw. Ermüdungseffekte von Kunststoffteilen des Verstellantriebs (vor allem bei hohen Temperaturen) verhindert.

Außerdem lassen sich unter Verwendung der Schlingfeder in den Verstellantrieb in einfacher Weise Dämpfungsmittel integrieren, die eine Reduzierung von Stoßbelastungen bewirken, wenn das entsprechende Verstellteil in einen Block gefahren wird, z. B. eine zu verstellende Fensterscheibe mit ihrer oberen Scheibenkante in die obere Scheibendichtung eines Fenster- bzw. Türrahmens einfährt.

Für einen Sperrmechanismus bzw. ein Bremssystem unter Verwendung einer Schlingfeder (sogenannte Schlingfederbremse) gelten ferner folgende Randbedingungen:
- Es wird ein stetiger bzw. stufenloser Eingriff der Schlingfederbremse ermöglicht, und zwar ohne Verwendung eines zusätzlichen, elektrisch betätigbaren Aktuators, sondern mechanisch gesteuert durch die Richtung des Kraftflusses; d. h., die Bremse soll dann sperren, wenn der Kraftfluss bzw. das Drehmoment abtriebseitig eingeleitet wird.
- Der Federdurchmesser, der Federdrahtquerschnitt sowie die Drahtgeometrie (rund oder mehreckig) werden den jeweiligen Bedingungen im konkreten Antriebssystem angepasst.
- Die Steifigkeit der Federenden muss hinreichend groß sein, um eine Krafteinleitung in die Schlingfeder zu ermöglichen.
- Die Schlingfeder ist in der Regel gegen eine als Bremsfläche dienende Anlagefläche vorgespannt und es sind die Flächenpressung, die Anzahl der Windungen, der Reibwert sowie die Schmierung derart auszulegen, dass einerseits durch Zusammenwirken der Schlingfeder mit der zugehörigen Bremsfläche (Anlagefläche) eine zuverlässige Brems- bzw. Sperrwirkung erzielt wird und andererseits bei geöffneter Bremse der Wirkungsgrad des Verstellantriebs möglichst wenig beeinträchtigt wird.

Der Verstellantrieb ist bevorzugt so ausgelegt, dass zumindest ein Teil der Getriebeelemente des Übersetzungsmechanismus, vorzugsweise die beweglichen Getriebeelemente des Übersetzungsmechanismus insgesamt, koaxial mit dem Scheibenläufer gelagert sind.

Die Schlingfeder umfasst mit ihren Windungen diesen Übersetzungsmechanismus und/oder den Scheibenläufer, indem sie ebenfalls koaxial zu dem Scheibenläufer angeordnet wird und so dimensioniert ist, dass sie die einzelnen Getriebeelemente des Übersetzungsmechanismus am Außenumfang des Übersetzungsmechanismus umgibt. D. h., dass die Getriebeelemente des Übersetzungsmechanismus, ausgenommen lediglich solche Teile, die zur Betätigung der Schlingfeder sowie zur Drehmomentübertragung zwischen Übersetzungsmechanismus und Abtriebselement bei Einleitung eines antriebs- bzw. abtriebseitigen Drehmomentes dienen, in radialer Richtung (bezogen auf die Drehachse des Scheibenläufers) nicht über die Schlingfeder hinausragen.

Radial außerhalb des von der Schlingfeder umschlossenen Gebietes liegen somit allenfalls (ausschließlich) diejenigen beweglichen Elemente des Verstellantriebs, die zum Betätigen bzw. Schalten (also Sperren oder Entsperren) der Schlingfeder sowie zur Drehmomentübertragung zwischen Übersetzungsmechanismus und Abtriebselement dienen, sowie hiermit gegebenfalls zusammenwirkende Dämpfungs- bzw. Federelemente. Innerhalb des von der Schlingfeder umschlossenen Bereiches des Verstellantriebs befinden sich demgegenüber sämtliche Bestandteile des Übersetzungsmechanismus, die die eigentliche Übersetzungsfunktion wahrnehmen.

Im Ergebnis sind die der Übersetzung dienenden Komponenten des Verstellantriebs innerhalb des von der Schlingfeder umschlossenen Gebietes angeordnet und die zum Schalten der Schlingfeder dienenden Komponenten des Verstellantriebs am Außenumfang der Schlingfeder angeordnet, wobei jedoch weder die einen noch die anderen Komponenten in axialer Richtung substanziell über die Schlingfeder hinausragen. Somit bilden die Schlingfeder sowie die in dem von der Schlingfeder umschlossenen Raum angeordneten Getriebeelemente des Übersetzungsgetriebes einerseits und die am Außenumfang der Schlingfeder angeordneten Elemente zum Betätigen der Schlingfeder sowie zur Kraftübertragung andererseits einen Übertragungsmechanismus zur Übertragung des von dem Scheibenläufer erzeugten Drehmoments auf ein Abtriebselement des Verstellantriebs, der sich durch eine äußerst flache Bauweise (geringe axiale Ausdehnung) auszeichnet.

Zur Sperrung eines abtriebseitig eingeleiteten Drehmomentes lässt sich die Schlingfeder gegen eine (vorzugsweise zylindrisch ausgebildete) Ringfläche drücken, so dass eine Sperrwirkung durch Kraft- bzw. Reibschluss erzielt wird. Die Ringfläche kann in einfacher Weise an dem Gehäuse des Verstellantriebs ausgebildet sein und einerseits eine innere Ringfläche bilden, gegen die die Schlingfeder mit radial nach innen wirkender Kraft gedrückt wird, oder eine äußere Ringfläche, gegen die die Schlingfeder mit radial nach außen wirkenden Kräften gedrückt wird. Die Schlingfeder ist dabei an dem entsprechenden Gehäuseteil axial gesichert, z. B. unter Verwendung entsprechender Vorsprünge oder sonstiger Konturen an dem Gehäuseteil.

Dabei kann die Schlingfeder elastisch in Richtung auf den gesperrten Zustand vorgespannt sein, so dass sie jeweils bei Einleitung eines abtriebseitigen Drehmomentes unmittelbar eine Sperrwirkung zur Verfügung stellt, während bei Einleitung eines antriebseitigen Drehmomentes die Schlingfeder zunächst von der zugeordneten Ringfläche abgehoben werden muss.

Die Schlingfeder ist dabei möglichst auf der Abtriebseite des Verstellantriebs angeordnet, d. h., bevorzugt zwischen dem Abtriebselement und dem Übersetzungsmechanismus des Verstellantriebs, so dass abtriebseitig eingeleitete Drehmomente bereits am Übergang von dem Abtriebselement zum Übersetzungsmechanismus gesperrt werden und gar nicht erst zu einer Belastung der Baugruppen des Übersetzungsmechanismus führen können.

Bei der Anordnung der Schlingfeder auf der Abtriebseite des Verstellantriebs ist zu beachten, dass dort im Vergleich zu der Antriebseite (wegen der untersetzenden Wirkung des Übersetzungsmechanismus) eine geringere Drehzahl dafür aber ein entsprechend höheres Antriebsmoment als an der Antriebseite besteht. Aufgrund des höheren Antriebsmomentes ist auch im geöffneten Zustand der Schlingfederbremse (Freilauf) ein vergleichsweise größeres Reibmoment tolerierbar, wenn dieses hinreichend klein im Vergleich zu dem sehr großen Antriebsmoment ist, so dass Erwärmung und Verschleiß gering bleiben sowie der hohe Gesamtwirkungsgrad des Verstellantriebs kaum beeinträchtigt wird.

Andererseits ist jedoch bei Anordnung der Schlingfeder auf der Abtriebseite ein entsprechend größeres Haltemoment aufzubringen, um eine hinreichend große Klemm- bzw. Bremswirkung zu erzielen. Dies bedeutet, dass die Schlingfeder entsprechend größer dimensioniert sein muss, insbesondere hinsichtlich des Querschnittes des Federdrahtes.

Für eine weitere Reduzierung der axialen Ausdehnung kann das Abtriebselement die Schlingfeder topfartig umgeben und gleichzeitig zur Aufnahme derjenigen Elemente dienen, die zu einer Betätigung der Schlingfeder beim Einleiten antriebseitiger bzw. abtriebseitiger Drehmomente dienen.

Die Betätigung der Schlingfeder erfolgt vorzugsweise an deren beiden Federenden, die hierzu in einer vorteilhaften Weiterbildung jeweils mit einem Schaltelement versehen sind. Die Federenden können dabei radial (bevorzugt wegen der Minimierung der axialen Bauhöhe) oder gegebenenfalls auch axial von der Schlingfeder abstehen.

Durch die Betätigung der Federenden über an diesen angebrachte Schaltelemente, kann eine verbesserte Kraftübertragung bei der Betätigung der Federenden (definierte Flächenpressung mit den zur Betätigung der Schlingfeder vorgesehenen Elementen) sowie eine Verringerung der Biegespannung erreicht werden. Ferner bewirkt eine definierte Führung dieser Schaltelemente die Sicherstellung eines wohldefinierten, reproduzierbaren Schaltvorganges zum Sperren bzw. Entsperren der Schlingfeder, je nach dem, ob ein abtriebseitig oder ein antriebseitig eingeleitetes Drehmoment vorliegt.

Das als topfförmige Abtriebscheibe ausgeführte Abtriebselement kann ferner, zusammen mit dem Gehäuse des Verstellantriebs, zum feuchtigkeitsdichten Umschließen des Verstellantriebs dienen, indem die Schnittstellen zwischen Abtriebselement, Achse und Gehäuse abgedichtet sind.

Um bei geringer axialer Bauhöhe gleichzeitig als Kippsicherung eine hinreichend große axiale Stützlänge für das Abtriebselement (an der Drehachse des Verstellantriebs) zur Verfügung zu stellen, kann in das Abtriebselement einstückig ein Verbindungselement, z.B. in Form eines Formschlusselementes, integriert sein, das ebenfalls auf der Drehachse des Verstellantriebs gelagert ist und das zur Verbindung der Abtriebscheibe mit dem nachgeordneten Verstellgetriebe, z. B. einer Seiltrommel eines Kraftfahrzeugfensterhebers dient. Das formschlüssige Anbringen der Seiltrommel am Abtriebselement ermöglicht eine besonders einfache Entkopplung des Verstellantriebs von der Seiltrommel in einem Service-Fall.

Um die Schlingfederbremse bei antriebseitiger Einleitung eines Drehmomentes zu lösen, also die Schlingfeder derart zu betätigen, dass einer Übertragung des antriebseitig eingeleiteten Drehmomentes auf die Abtriebseite nichts entgegensteht, weist ein geeignetes Element des Übertragungsmechanismus, vorzugsweise das dem Abtriebselement unmittelbar vorgeschaltete Element des Übertragungsmechanismus Schaltbereiche, z. B. in Form von Schaltklauen, auf, mit denen es auf die Federenden der Schlingfeder (und zwar insbesondere auf die dort vorgesehenen Schaltelemente) einwirken kann, um die Schlingfeder von der zugeordneten ringartigen, insbesondere zylindrischen, Bremsfläche abzuheben und so zu entsperren.

Umgekehrt wirkt bei einer abtriebseitigen Einleitung eines Drehmomentes das Abtriebselement mit geeigneten Anschlagflächen derart auf die Federenden der Schlingfeder ein, dass diese mit desto größerer Kraft gegen die zugeordnete ringartige Bremsfläche gedrückt wird. Hierdurch wird die gewünschte Sperrwirkung erzeugt, die ein ungewünschtes Verdrehen des Abtriebselements bzw. eine Rückstellbewegung der Fensterscheibe in der Fahrzeugtür verhindert. Dies ist das bekannte Grundprinzip einer Schlingfederbremse: Je nach dem, ob ein Drehmoment antriebseitig oder abtriebseitig, d. h. im vorliegenden Fall vom Übersetzungsmechanismus her oder vom Abtriebselement her, auf die Federenden der Schlingfeder einwirkt, wird diese entweder von der zugeordneten ringartigen Bremsfläche abgehoben oder umso fester gegen diese gedrückt, so dass entweder die Bremse gelöst (freigeschaltet) wird oder die gewünschte Brems- bzw. Sperrwirkung im Hinblick auf ein abtriebseitig eingeleitetes Drehmoment erzielt wird.

Neu ist vorliegend die Integration einer solchen Schlingfederbremse in einen flachbauenden Verstellantrieb mit einem Scheibenläufer (Scheibenanker) derart, dass die der Übersetzung dienenden, beweglichen Getriebeelemente des Verstellantriebs in dem von der Schlingfeder umfassten Raum liegen und andererseits die der Betätigung bzw. zum Schalten der Schlingfeder dienenden Elemente am äußeren Umfang der Schlingfeder angeordnet sind (ohne axial substanziell über diese hinauszuragen). Hierdurch ergibt sich eine extrem flache Bauweise der gesamten Anordnung, wobei gleichzeitig die bei Verstellantrieben übliche Trennung zwischen dem Antriebsmotor einerseits und dem nachgeordneten Getriebe andererseits aufgehoben wird. Vielmehr ist der Scheibenläufer (der die eigentliche Motorfunktion im engeren Sinne wahrnimmt) mit den nachgeordneten Elementen des Verstellantriebs (die ein Übersetzungsgetriebe bilden) zu einer kompakten, flachen Baueinheit zusammengefasst und bildet sozusagen einen Flachmotor mit unmittelbar integriertem Getriebe, also eine kompakte, flache Baueinheit, die das am Scheibenläufer erzeugte mechanische Drehmoment einerseits durch elektromechanische Energiewandlung am Scheibenläufer erzeugt und andererseits durch den nachgeordneten Übersetzungsmechanismus auf das Abtriebselement des Verstellantriebs überträgt.

In einer bevorzugten Weiterbildung der Erfindung ist auf der Achse des Scheibenläufers ein axial feststehendes axiales Sicherungselement (z.B. in Form einer an der Antriebsachse angeordneten Scheibe oder in Form eines Bundes oder Absatzes) zwischen dem Scheibenläufer und dem Abtriebselement angeordnet, so dass (insbesondere abtriebsseitig eingeleitete) axial wirkende Kräfte von diesem Sicherungselement aufgenommen werden und nicht auf den Scheibenläufer einwirken können. Das Sicherungselement kann beispielsweise zwischen dem Scheibenläufer und dem unmittelbar nachgeordneten Getriebeelement des Übersetzungsmechanismus, oder zwischen zwei axial hintereinander angeordneten Getriebeelementen des Übersetzungsmechanismus oder zwischen dem abtriebsseitigen Getriebeelement des Übersetzungsmechanismus und dem Abtriebselement des Verstellantriebs angeordnet sein.

Die (von der Antriebsseite zur Abtriebsseite betrachtetet) vor dem axialen Sicherungselement liegenden Elemente des Verstellantriebs, also insbesondere der Scheibenläufer selbst sowie gegebenenfalls ein Teil der Getriebeelemente des Übersetzungsmechanismus, sind somit von abtriebseitig eingeleiteten, axial wirkenden Kräften entkoppelt, da diese von dem Sicherungselement aufgenommen werden. Bei der Ausbildung des Übersetzungsmechanismus als zweistufiges Planetengetriebe, liegen neben dem Scheibenläufer bevorzugt auch die Getriebeteile der ersten Planetenstufe vor dem axialen Sicherungselement.

Gemäß einer bevorzugten Ausführungsform der Erfindung wirkt der Übertragungsmechanismus über Dämpfungsmittel in Form mindestens eines Dämpfungs- bzw. Federelementes auf das Abtriebselement ein, um eine hinreichende Dämpfungswirkung, also eine Reduzierung von Drehmoment- und Kraftspitzen zu gewährleisten, wenn das Abtriebselement gegen einen Block fährt, z. B. weil die über das Abtriebselement zu verstellende Fensterscheibe eines Kraftfahrzeugs in die obere Scheibendichtung einfährt.

Die Dämpfungselemente sind dabei vorzugsweise am äußeren Umfang der Schlingfeder teilweise zwischen den Federenden und entsprechenden Anschlagflächen des Abtriebselementes angeordnet, so dass das mindestens eine Dämpfungselement deformiert wird, wenn der Übertragungsmechanismus des Verstellantriebs mit seinem abtriebseitigen Element über die Federenden und die Dämpfungselemente auf die zugeordneten Anschlagflächen des Abtriebselementes einwirkt. Diese Deformation wird noch verstärkt, wenn das am Verstellantrieb wirkende Drehmoment beim Anfahren eines Blockes gegen ein Maximum strebt. Durch die entsprechende Energieabsorption im Dämpfungselement wird somit das Auftreten zu großer Drehmomentspitzen verhindert.

Die Anordnung ist dabei derart ausgelegt, dass eine bei einer Entspannung des deformierten Dämpfungselementes ausgelöste Rückstellbewegung der Schaltbereiche kleiner ist als das Umkehrspiel des Sperrmechanismus, um ein Freischalten der Schlingfeder zu vermeiden. Unter dem Umkehrspiel des Sperrmechanismus wird derjenige Weg verstanden, den die zur Betätigung der Schlingfeder an ihren Federenden vorgesehenen Schaltbereiche (Schaltklauen) zurücklegen müssen, um beispielsweise durch entsprechendes Betätigen der Schlingfeder von einer Drehbewegung entlang einer ersten Richtung (z. B. einer Linksdrehung) in eine Drehbewegung entlang der entgegengesetzten Richtung (z. B. eine Rechtsdrehung) überzugehen. Durch die besagte Auslegung der Dämpfungselemente wird demnach verhindert, dass aufgrund der Rückstellwirkung der sich entspannenden Dämpfungselemente die Schlingfeder für eine Drehbewegung entgegengesetzt zu der Richtung freigeschaltet werden könnte, entlang der zuvor der Verstellantrieb in einen Block, nämlich die Fensterscheibe in eine obere Scheibendichtung gefahren worden war. Hierdurch wird ein zuverlässiges Verriegeln der Schlingfederbremse gewährleistet, ohne dass die Gefahr besteht, dass die Schlingfederbremse für eine entgegengesetzte Drehbewegung des Verstellantriebs (aufgrund der Rückstellwirkung der Dämpfungselemente) freigeschaltet wird.

Die Dämpfungselemente sind bevorzugt in zugeordneten Führungseinrichtungen geführt, die beispielsweise an dem Abtriebselement ausgebildet sein können.

Ein zusätzlicher Dämpfungseffekt beim Anfahren eines Blockes kann durch ein axiales und/oder radiales reibendes Zusammenwirken des abtriebseitigen Elementes des Übersetzungsmechanismus mit dem Abtriebselement des Verstellmechanismus erreicht werden. Es geht hierbei um die Erzielung einer kontrollierten Reibung zwischen Stirnflächenbereichen oder Umfangsflächenbereichen des Abtriebselementes und dem unmittelbar vorgeschalteten Element des Übertragungsmechanismus beim Anfahren eines Blockes bzw. beim Entspannen der Dämpfer nach dem Abschalten des Antriebs. Dies kann beispielsweise durch eine axiale Verspannung der ohnehin vorgesehenen Dämpfungselemente oder durch das Zusammenwirken der beiden vorgenannten Elemente über keil- bzw. rampenförmig ausgestaltete Reibflächen erreicht werden.

Um bei einem flachen Aufbau des Verstellantriebs, also einer entsprechend geringen Stützlänge der einzelnen Elemente des Übertragungsmechanismus entlang der Drehachse, die Getriebeelemente des Übertragungsmechanismus möglichst kippsicher auf der Drehachse zu lagern, ist das abtriebseitige Getriebeelement in axialer Richtung an dem Abtriebselement gelagert, für das sich ja, wie oben bereits dargelegt, eine vergleichsweise größere Stützlänge durch die einstückige Ausbildung mit einem Verbindungs- bzw. Formschlussbereich zur Ankopplung eines nachgeordneten Getriebeteiles, wie z. B. einer Seiltrommel, erreichen lässt. Die axiale Lagerung kann beispielsweise dadurch erreicht werden, dass am Abtriebselement radial erstreckte Stege mit Hinterschnitten im Bodenbereich des Abtriebselementes vorgesehen sind, in die das vorgeschaltete Getriebeelement des Übersetzungsmechanismus eingreift. Zum Einfügen des Getriebeelementes in diese Hinterschnitte können am Getriebeelement Aussparungen vorgesehen sein, die mit den Stegen korrespondieren und dadurch ein Zusammensetzen des Getriebeelementes des Übersetzungsmechanismus und des Abtriebselementes nach Art eines Bajonettverschlusses ermöglichen.

Der Übersetzungsmechanismus wird in einer bevorzugten Ausführungsform der Erfindung durch ein Umlaufrädergetriebe, insbesondere in Form eines Planetengetriebes, oder eines auf einer Relativbewegung zweier koaxial zueinander gelagerter Hohlräder mit Innenverzahnungen unterschiedlicher Zähnezahl, die mit einem gemeinsamen Antriebselement in Eingriff stehen, beruhenden Getriebes gebildet. Hierzu sei beispielhaft auf die DE 197 08 310 A1, die DE 100 24 905 A1 und die DE 100 24 908 A1 verwiesen.

Im Fall der Ausbildung des Übersetzungsmechanismus als Planetengetriebe sind die beweglichen, der Übersetzung dienenden Elemente des Übersetzungsmechanismus innerhalb eines Hohlrades angeordnet, auf dessen Innenverzahnung die Getriebeelemente des Übersetzungsmechanismus, z.B. die Planeten der einzelnen Stufen eines einstufigen oder mehrstufigen, bevorzugt zweistufigen Planetengetriebes abrollen. Indem die Schlingfeder dieses Hohlrad umgreift und dabei bevorzugt gleichzeitig die nicht mit einer Verzahnung versehene äußere Umfangsfläche des Hohlrades als ringartige Bremsfläche nutzt, wird der angestrebte flache Aufbau der Gesamtanordnung erreicht, wobei die Schlingfeder den durch ein Umlaufrädergetriebe gebildeten Übersetzungsmechanismus umschließt.

In einer bevorzugten Ausführungsform ist weiter vorgesehen, dass die elektrischen Anschlüsse des elektromechanischen Energiewandlers (Motoranschlüsse des Verstellantriebs) beim Abschalten des Verstellantriebs kurzgeschlossen werden, um einen antriebseitigen temporären Beharrungseffekt durch Gegeninduktion am Scheibenläufer zu erzeugen und so ein hinreichend großes Zeitfenster für ein sicheres Sperren der Schlingfeder zu gewährleisten. Hier wird also temporär ein elektrischer Bremseffekt erzeugt, der ebenso wie die oben dargelegte Auslegung der Dämpfungselemente sicherstellen soll, dass beim Abschalten des Verstellantriebs, z.B. nachdem dieser in einen Block gefahren ist, kein unbeabsichtigtes Freischalten der Schlingfederbremse in entgegengesetzter Drehrichtung erfolgt. Sobald dann die Schlingfeder unter der Wirkung ihrer Vorspannung ihre Sperrlage eingenommen hat, wird die erforderliche Sperrwirkung allein durch die Schlingfederbremse zur Verfügung gestellt, wobei die Sperrwirkung nicht nur auf der Vorspannung der Schlingfeder beruht, sondern bei Einleitung eines abtriebseitigen Drehmomentes noch verstärkt wird, indem die Windungen der Schlingfeder (durch abtriebsseitige Betätigung der Federenden) gegen die zugeordnete ringartige Bremsfläche gedrückt werden.

In einer bevorzugten Weiterbildung der Erfindung ist in das mehrteilige Gehäuse des Verstellantriebs ein Referenzpunktsystem integriert, um die einzelnen Gehäuseteile und ggf. einen Lagerdeckel zueinander ausrichten zu können und diese wiederum lagerichtig zu dem tragenden Teil, insbesondere tragenden Fahrzeugteil, einbauen zu können, an dem der Verstellantrieb angeordnet und befestigt werden soll. Das Gehäuse des Verstellantriebs ist dabei vorzugsweise zwei- oder dreiteilig ausgebildet, mit einem sogenannten äußeren, scheibenläuferseitigen Gehäuseteil und einem sogenannten inneren, abtriebsseitigen Gehäuseteil sowie ggf. einem dritten Gehäuseteil in Form eines Lagerdeckels.

Die zur Erzeugung einer Drehbewegung des Scheibenläufers (bzw. der Ankerscheibe) erforderlichen Magnete, welche auf die stromdurchflossenen Leiter des Scheibenläufers einwirken und welche einseitig oder beidseitig neben dem Scheibenläufer angeordnet und am jeweiligen Gehäuseteil des Antriebsgehäuses festgelegt sind, werden hinsichtlich ihrer Geometrie bevorzugt derart ausgelegt, dass sie an den Verlauf der elektrischen Leiter einer Windung des Scheibenläufers angepasst sind, wobei zugleich eine möglichst einfache Herstellbarkeit der einzelnen Magnete möglich sein soll. Hierzu werden die Magnete derart ausgebildet, dass sie bei einer vorgegebenen Größe möglichst viele gleichsinnig bestromte Leiterelemente des Scheibenläufers weitgehend überdecken. D. h., der Verlauf der äußeren Kontur der Magnete ist an den Verlauf der elektrischen Leiter einer Windung des Scheibenläufers angepasst. Radial zum Zentrum hin sind die Magnete dabei jedoch kreisbogenförmig beschnitten, so dass die radial inneren Abschnitte der elektrischen Leiter des Scheibenläufers nicht überdeckt sind. Hierdurch ergibt sich eine Halbmond-ähnliche Geometrie der Magnete.

Weitere Merkmale und Vorteile der Erfindung werden bei der Nachfolgenden Beschreibung von Ausführungsbeispielen anhand der Figuren deutlich werden.

Es zeigen:
- Fig. 1: eine perspektivische Explosionsdarstellungen eines Verstellantriebs für einen Kraftfahrzeugfensterheber;
- Fig. 2: eine zweite perspektivische Explosionsdarstellungen des Verstellantriebs aus Fig. 1;
- Fig. 3: einen schematischer Schnitt durch den Verstellantrieb aus den Figuren 1 und 2 mit Lagerdeckel für eine abtriebseitig angeordnete durch den Verstellantrieb anzutreibende Seiltrommel - jedoch ohne Darstellung der Getriebeelemente, über die die Seiltrommel mit dem antriebseitigen elektromechanischen Energiewandler gekoppelt ist;
- Fig. 4: eine detaillierte Darstellung der Anordnung der dem Scheibenläufer zugeordneten Magnete;
- Fig. 5a bis 5c: drei Darstellungen des Zusammenwirkens von Getriebeelementen des Verstellantriebs mit einer zugeordneten Schlingfederbremse;
- Fig. 6: eine Abwandlung des Verstellantriebs aus den Figuren 1 bis 3 hinsichtlich der Getriebeelemente, über die die Seiltrommel mit dem antriebsseitigen elektromechanischen Energiewandler gekoppelt ist;
- Fig. 7: eine erste Abwandlung eines Verstellantriebs gemäß Figur 6;
- Fig. 8: eine zweite Abwandlung eines Verstellantriebs gemäß Figur 6.

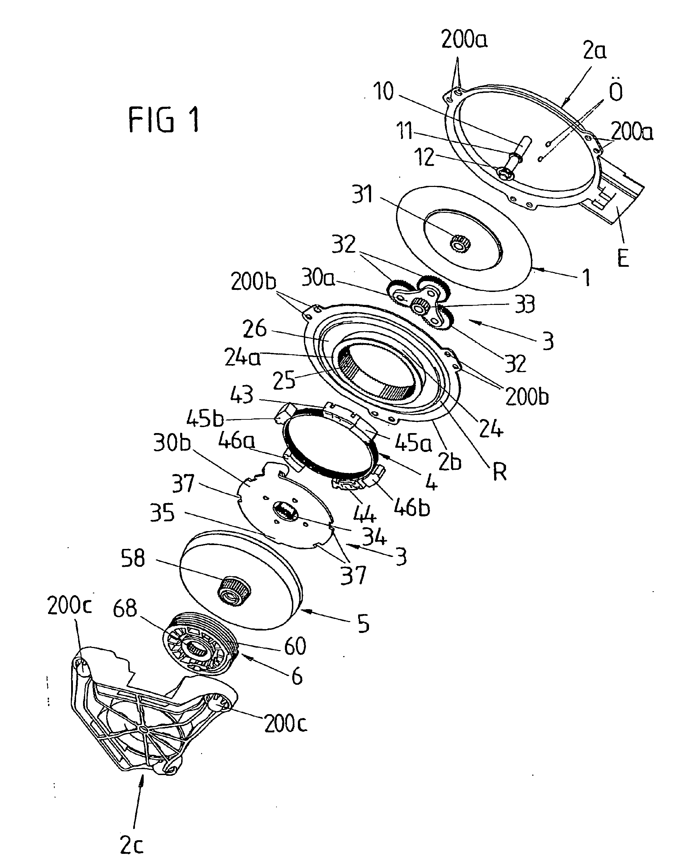

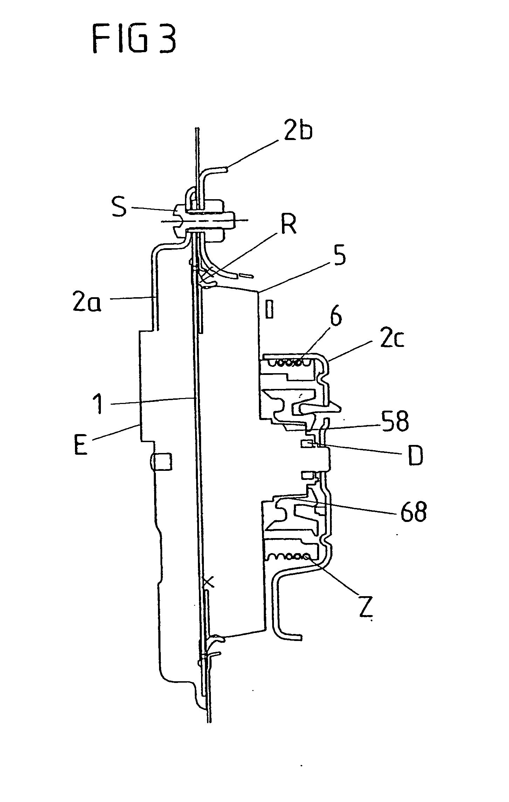

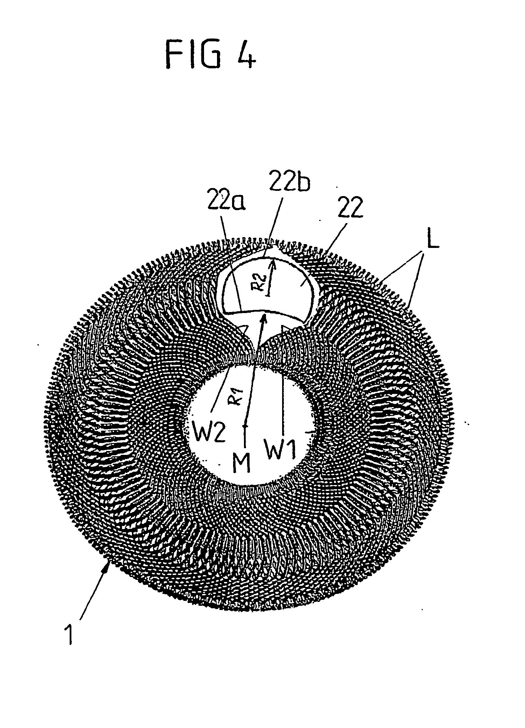

Im Folgenden wird zunächst anhand der Figuren 1, 2 und 3 der grundsätzliche Aufbau eines Verstellantriebs für einen Kraftfahrzeugfensterheber dargestellt werden, der sich durch eine geringe Bauhöhe in axialer Richtung unter Einschluss separater, den Wirkungsgrad nur gering beeinträchtigender Sperrmittel in Form einer Schlingfederbremse auszeichnet. In Figur 3, die insbesondere die Ausbildung der Abtriebseite des Verstellantriebs und dessen Verbindung mit einer in einem Lagerdeckel angeordneten Seiltrommel betrifft, ist dabei die Getriebeanordnung, über die die Antriebseite mit der Abtriebseite des Verstellantriebs gekoppelt ist, nicht dargestellt. Anhand der Figur 4 werden anschließend Einzelheiten hinsichtlich der Ausbildung des durch einen stromdurchflossenen Scheibenläufer mit zugeordneten Magneten gebildeten elektromechanischen Wandlers des Verstellantriebs beschrieben werden. Anhand der Figuren 5a bis 5c wird schließlich im Detail das Zusammenwirken der Getriebeelemente des Verstellantriebs mit der zugeordneten Schlingfederbremse erläutert werden.

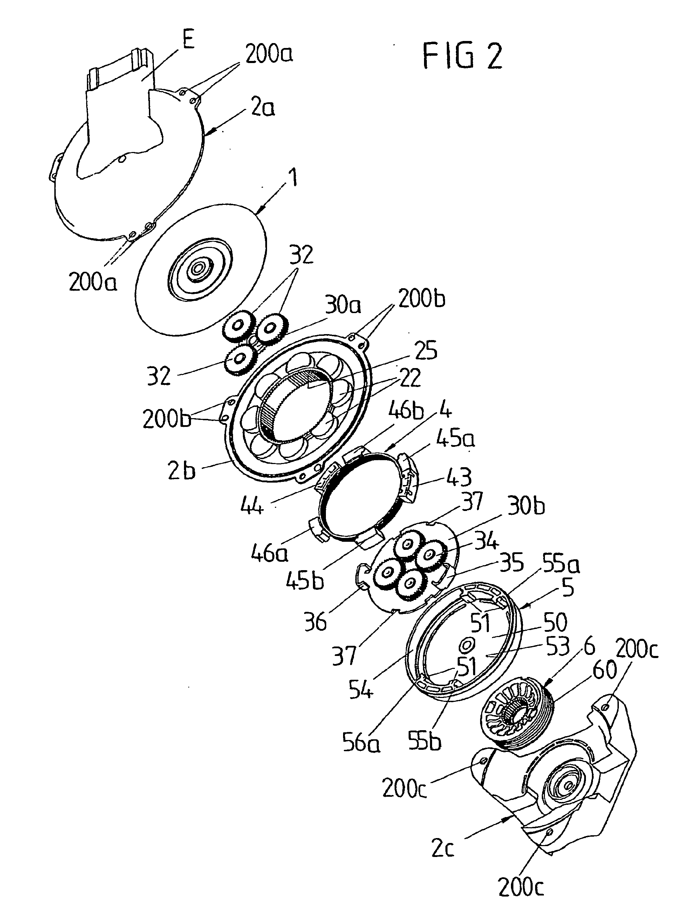

Gemäß den Figuren 1 und 2 umfasst der Verstellantrieb einen elektromechanischen Energiewandler mit einem auf einer ortsfesten, starren Achse 10 (feststehenden Antriebsachse) gelagerten Scheibenläufer 1, bei dem es sich um eine stromdurchflossene Ankerscheibe handelt. Bei Bestromung der elektrischen Leiter, die den Scheibenläufer 1 bilden bzw. auf diesem angeordnet sind, wird durch den Einfluss des Magnetfeldes dem Scheibenläufer 1 zugeordneter, ringartig hintereinander angeordneter Magnete 22 ein Drehmoment erzeugt, welches je nach Richtung des Stromflusses eine Drehbewegung des Scheibenläufers 1 um die feststehende Achse 10 entlang der einen oder anderen Drehrichtung hervorruft. Entsprechende Magnete 22 können dabei wahlweise nur über einer Oberfläche (wie in den Figuren 1 und 2 dargestellt) oder über beiden Oberflächen des Scheibenläufers 1 angeordnet sei. Eine besonders vorteilhafte geometrische Ausbildung der Magnete 22 im Hinblick auf den Verlauf der elektrischen Leiter des Scheibenläufers 1 wird weiter unten anhand Figur 4 erläutert werden.

Die feststehende Achse 10, auf der der Scheibenläufer 1 drehbar lagert, ist an einem äußeren Gehäuseteil 2a festgelegt, welches insbesondere den Scheibenläufer 1 aufnimmt und daher auch als scheibenläuferseitiges Gehäuseteil 2a bezeichnet wird. An dem scheibenläuferseitigen Gehäuseteil 2a des Verstellantriebs ist ein Energieversorgungs- und Steuerungsmodul E angeordnet, welches die zur Bestromung des Scheibenläufers 1 sowie zur Steuerung von dessen Drehbewegung erforderlichen elektrischen Komponenten enthält. Um die Bestromung der elektrischen Leiter des Scheibenläufers 1 mittels des Elektronikmoduls E zu ermöglichen, sind in dem scheibenläuferseitigen äußeren Gehäuseteil 2a Öffnungen Ö vorgesehen, durch die hindurch an dem Energieversorgungs- und Steuerungsmodul E angeordnete Bürsten in das Innere des Gehäuseteiles 2a ragen und dort mit dem Scheibenläufer 1 kontaktiert sind.

An dem scheibenläuferseitigen, äußeren Gehäuseteil 2a sind ferner Befestigungsstellen 200a zur Verbindung dieses Gehäuseteiles 2a mit weiteren Gehäuseteilen 2b, 2c vorgesehen, z.B. über Befestigungselemente in Form von Schrauben S, vergl. Fig. 3.

An dem Scheibenläufer 1 ist koaxial ein Zahnrad 31 (Zahnritzel) angeordnet (eingepresst), das als Eingangsstufe für eine dem Scheibenläufer 1 nachgeordneten Übersetzungsmechanismus 3 dient, mit dem das am Scheibenläufer 1 erzeugte Drehmoment zu einem Abtriebselement 5 übertragen und dabei übersetzt (vorliegend insbesondere untersetzt) wird. Dieser Übersetzungsmechanismus 3 ist vorliegend als ein Umlaufgetriebe in Form eines (zweistufigen) Planetengetriebes ausgebildet, wobei das am Scheibenläufer 1 angeordnete Zahnrad 31 ein Sonnenrad der ersten Getriebestufe des Planetengetriebes 3 bildet.

Dem koaxial zu dem Scheibenläufer 1 angeordneten und drehfest mit diesem verbundenen Sonnenrad 31 der ersten Getriebestufe des Planetengetriebes 3 sind drei Planetenräder 32 zugeordnet, die jeweils drehbar an einem Planetenträger 30a der ersten Planetenstufe gelagert sind und mit dem Sonnenrad 31 in Eingriff stehen. Dieser Planetenträger 30a ist wiederum koaxial zu dem Scheibenläufer 1 drehbar auf der feststehenden Achse 10 des Verstellantriebs gelagert und auf seiner dem Scheibenläufer 1 abgewandten Seite drehfest mit einem weiteren Zahnrad 33 (Zahnritzel) verbunden, welches als Sonnenrad für eine zweite Stufe des Planetengetriebes 3 dient und ebenfalls drehbar auf der feststehenden Achse 10 des Verstellantriebs gelagert ist. Das besagte Zahnrad 33 und der Planetenträger 30a sind dabei vorzugsweise einteilig hergestellt (aneinander angeformt).

Dem Sonnenrad 33 der zweiten Planetenstufe sind beispielsweise insgesamt vier an einen Planetenträger 30b der zweiten Getriebestufe drehbar gelagerte Planetenräder 34 zugeordnet, die jeweils mit dem Sonnenrad 33 der zweiten Getriebestufe in Eingriff stehen.

Sowohl die Planetenräder 32 der ersten Getriebestufe als auch die Planetenräder 34 der zweiten Getriebestufe laufen jeweils auf der Innenverzahnung eines Hohlrades 25 des Planetengetriebes 3 ab. Dieses Hohlrad ist an einem inneren, das Planetengetriebe umgreifenden Gehäuseteil 2b ausgebildet, das nachfolgend auch als getriebeseitiges Gehäuseteil bezeichnet wird. Dieses innere, getriebeseitige Gehäuseteil 2b weist wiederum Befestigungsstellen 200b in Form von Befestigungsöffnungen zur Verbindung mit dem äußeren, scheibenläuferseitigen Gehäuseteil 2a auf.

Das Hohlrad 25 ist ausgebildet an einem von dem zweiten Gehäuseteil 2b in axialer Richtung abstehenden, ringförmig umlaufenden Kragen, der zugleich eine Bremsfläche 24 für eine Schlingfederbremse 4 des Verstellantriebs bildet. An dieser ringförmig umlaufenden, zylindrischen Bremsfläche 24 lässt sich eine Schlingfeder 4 aufnehmen, wobei diese zwischen einer Oberfläche des zweiten Gehäuseteiles 2b und einem an der ringartigen Bremsfläche 24 umlaufenden radialen Bund axial gesichert ist. Auf dem inneren, getriebeseitigen Gehäuseteil 2b ist ferner ein Dichtungsring R (mit einer Dichtlippe) angeordnet, um das Getriebe zur Abtriebsseite hin abzudichten.

Das innere Gehäuseteil 2b dient zugleich der Aufnahme der dem Scheibenläufer 1 zugeordneten Magnete 22. Entsprechend der eingangs beschriebenen nur einseitigen Anordnung der Magnete 22 sind vorliegend an dem äußeren, scheibenläuferseitigen Gehäuseteil 2a keine Magnete vorgesehen. Bei einer Anordnung entsprechender Magnete beidseits des Scheibenläufers 1, also über dessen beiden Oberflächen, können sowohl an dem äußeren, scheibenläuferseitigen also auch an dem inneren, getriebeseitigen Gehäuseteil 2a, 2b entsprechende Magnete ringartig hintereinander angeordnet sein.

Anhand Figur 1 wird deutlich, dass auf der feststehenden Achse 10 des Verstellantriebs etwa mittig (in axialer Richtung betrachtet) ein axiales Sicherungselement 11 angeordnet ist, welches dort axial unverschieblich fixiert ist und den Verstellantrieb in axialer Richtung in zwei Antriebsgruppen unterteilt. Die erste Antriebsgruppe, bestehend aus dem Scheibenläufer 1, dem Sonnenrad 31 und den zugeordneten Planetenrädern 32 der ersten Getriebestufe und dem Sonnenrad 33 der zweiten Getriebestufe ist gemeinsam auf einem Abschnitt der feststehenden Achse 10 angeordnet, der sich zwischen dem scheibenläuferseitigen, äußeren Gehäuseteil 2a und dem axialen Sicherungselement 11 erstreckt. Die axial hieran anschließenden Getriebeelemente 33, 5 des Verstellantriebs sind - vom Scheibenläufer 1 aus gesehen - jenseits des axialen Sicherungselementes 11 angeordnet.

Das axiale Sicherungselement 11 bewirkt eine axiale Entkopplung des Scheibenläufers 1 sowie der unmittelbar dahinter angeordneten ersten Getriebestufe 31, 32 des Planetengetriebes 3 und des mit dem Planetenträger 30a dieser Getriebestufe verbundenen Sonnenrades 33 der zweiten Getriebestufe von den weiter abtriebseitig angeordneten Getriebeelementen, nämlich den Planetenrädern 34 der zweiten Getriebestufe mit dem zugeordneten Planetenträger 30b und dem Abtriebselement 5. Hierdurch wird erreicht, dass abtriebseitig eingeleitete, axial wirkende Kräfte nicht zu dem Scheibenläufer 1 und den unmittelbar dahinter angeordneten Getriebeelementen 31, 32, 33 gelangen können.

Somit sind der Scheibenläufer 1 und die unmittelbar nachgeordneten Getriebeelemente 31, 32, 33 des Planetengetriebes 3 hinsichtlich axial wirkender Kräfte von der Abtriebseite des Verstellantriebs entkoppelt. Solche axial wirkenden Kräfte können beispielsweise bei Verwendung des Verstellantriebs zum Betrieb eines Seilfensterhebers dadurch hervorgerufen werden, dass das als Zugmittel dienende Antriebsseil nicht exakt tangential in eine mit dem Verstellantrieb anzutreibende Seiltrommel 6 einläuft und hierdurch axial wirkende Kräfte hervorruft.

Anhand Figur 1 wird auch deutlich, dass die jenseits des axialen Sicherungselementes 11 angeordnete topfartige Abtriebscheibe 5 an ihrem dem Planetengetriebe 3 abgewandten axialen Ende (also an ihrem abtriebseitigen Ende des Formschlusselementes 58) mittels einer zweiten, an der feststehenden Achse 10 fixierten axialen Sicherung 12 axial gelagert und gesichert ist. Diese axiale Sicherung wirkt indirekt auch auf die Seiltrommel 6, die ja formschlüssig an der Abtriebscheibe 5 befestigt ist. Ferner ist an jenem axialen Ende der feststehenden Achse 10 ein zwischen dem Formschlusselement 58 der Abtriebscheibe 10 und der zweiten axialen Sicherung 12 aufgenommener Dichtring D angeordnet, um das Eindringen von Feuchtigkeit, Staub oder dergleichen in den Verstellantrieb von der Abtriebseite her zu verhindern.

Die auf der ringartigen Bremsfläche 24 des zweiten, inneren Gehäuseteiles 2b angeordnete Schlingfeder 4 ist derart vorgespannt, dass sie die Tendenz hat, sich reibend an die ringartige Bremsfläche 24 anzulegen und bei abtriebsseitiger Drehmomenteinleitung eine Sperrwirkung zu erzeugen, die die Übertragung abtriebseitig in den Verstellantrieb eingeleiteter Drehmomente zur Antriebseite, d. h. insbesondere zu dem Scheibenläufer 1 hin verhindert.

Da die ringartige Bremsfläche 24 die äußere Oberfläche des an dem inneren Gehäuseteil 2b vorgesehenen Kragens bildet, dessen innere Oberfläche mit einer Verzahnung versehen als Hohlrad 25 für das Planetengetriebe 3 dient, umfasst die an der ringartigen Bremsfläche 24 anliegende Schlingfeder 4 zugleich auch sämtliche bewegliche Getriebeelemente 30a, 30b, 31, 32, 33, 34 des Planetengetriebes 3, ausgenommen die am Planetenträger 30b der zweiten Getriebestufe vorgesehenen Schaltbereiche (Schaltklauen) 35, 36, die zur Betätigung der Schlingfeder 4 dienen. Durch diese Anordnung der Schlingfeder 4 am äußeren Umfang des Übersetzungsmechanismus (Planetengetriebe 3) des Verstellantriebs führt die Schlingfederbremse nicht zu dem Erfordernis zusätzlichen Bauraums in axialer Richtung des Verstellantriebs.

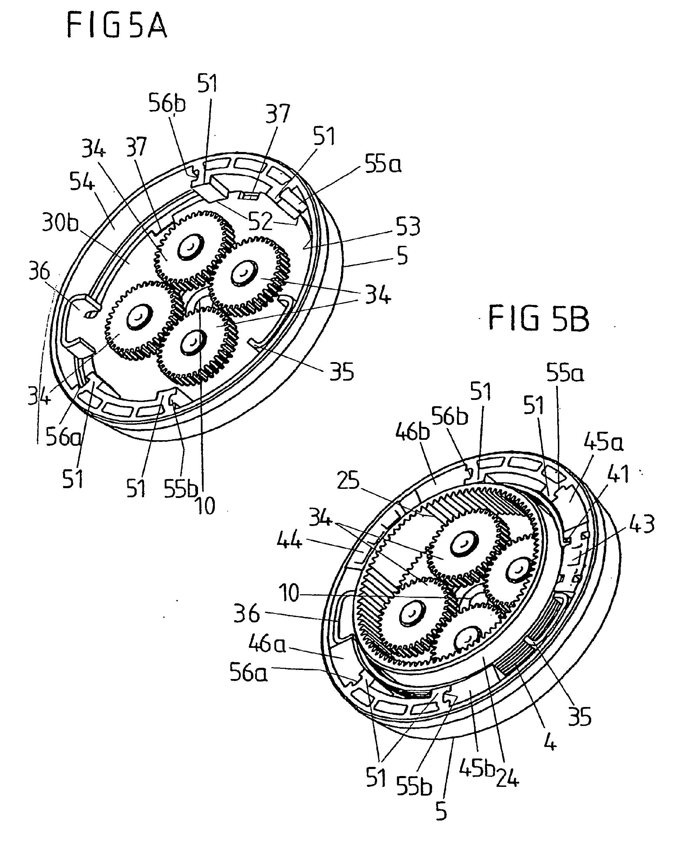

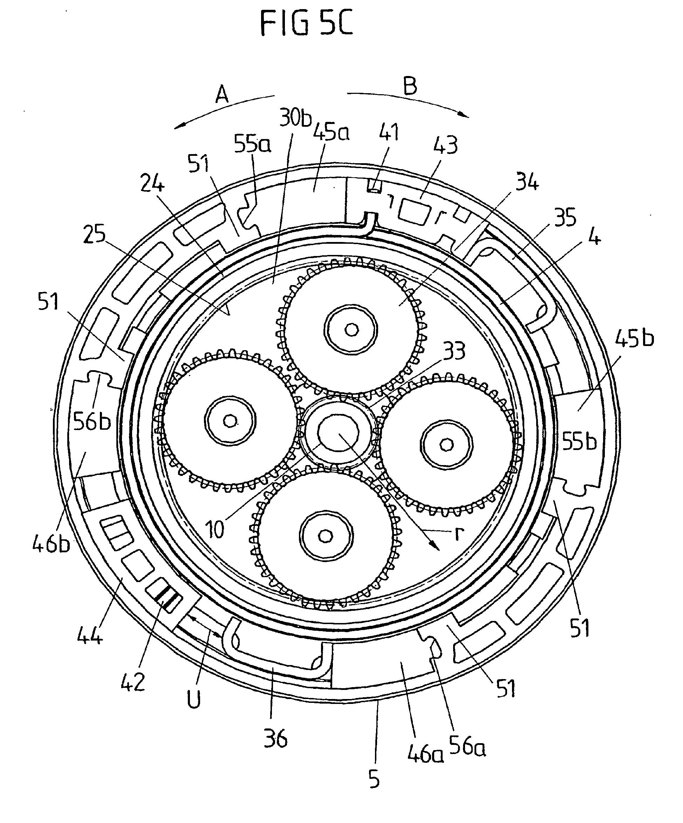

Zur Betätigung der Schlingfeder 4, mit dem Ziel sie entweder (bei antriebseitiger Einleitung eines Drehmomentes mittels des Scheibenläufers 1) von der ringartigen Bremsfläche 24 abzuheben oder sie andererseits (bei abtriebseitiger Einleitung eines Drehmomentes über die Seiltrommel 6) fest gegen die ringartige Bremsfläche 24 zu drücken, dienen die Federenden 41, 42 (vergleiche Figuren 5b und 5c) der Schlingfeder 4, die hierzu jeweils mit Schaltelementen 43, 44 versehen sind, in die die Federenden 41, 42 radial eingesteckt sind. Jedem Schaltelement 43, 44 ist eine Schaltklaue 35, 36 des Planetenträgers 30b der zweiten Getriebestufe des Planetengetriebes 3 zugeordnet, wobei je nach Drehrichtung des Scheibenläufers 1 die eine oder andere Schaltklaue 35, 36 auf das eine oder andere Schaltelement 43, 44 der Schlingfeder 4 einwirkt, um dieses von der ringartigen Bremsfläche 24 abzuheben und die Übertragung eines eingangseitig eingeleiteten Drehmomentes zur Abtriebseite zu ermöglichen.

Die Übertragung des Drehmomentes zur Abtriebseite erfolgt dadurch, dass der Planetenträger 30b der zweiten Getriebestufe und die Schlingfeder 4 in einem Abtriebselement in Form einer topfartigen Abtriebscheibe 5 angeordnet sind, wo die Schaltklauen 35, 36 über die Schaltelemente 43, 44 der Schlingfeder 4 sowie über zusätzliche Dämpfungselemente 45a, 45b; 46a, 46b auf entsprechende Anschlagflächen 55a, 55b; 56a, 56b der topfartigen Abtriebscheibe 5 einwirken können.

Die Schaltklauen 35, 36 des Planetenträgers 30b der zweiten Getriebestufe dienen somit nicht nur zum Freischalten der Schlingfeder 4 bei antriebseitiger Einleitung eines Drehmomentes durch den Scheibenläufer 1, sondern insbesondere auch als Kraftübertragungselemente, über die ein antriebseitig eingeleitetes Drehmoment (über entsprechende Anschlagflächen 55a, 55b; 56a, 56b) auf die Abtriebscheibe 5 übertragen wird.

Dabei wird mittels der beiden Getriebestufen des Planetengetriebes 3 eine definierte Übersetzung des am Scheibenläufer 1 erzeugten Drehmomentes zur Abtriebseite hin erreicht, und zwar eine Übersetzung in Form einer sogenannten Untersetzung. D. h., dass sich der Planetenträger 30b der zweiten Getriebestufe des Planetengetriebes 3 mit einer (durch das Übersetzungsverhältnis bestimmten) erheblich geringeren Drehzahl um die feststehende Achse 10 dreht als der Scheibenläufer 1, dabei aber ein entsprechend größeres Antriebsmoment zur Verfügung stellt. Hierdurch können für den Betrieb eines Fensterhebers entsprechend große Verstellkräfte bei definierten Verstellgeschwindigkeiten zur Verfügung gestellt werden.

Wie insbesondere aus Figur 2 hervorgeht, ist der Planetenträger 30b der zweiten Getriebestufe des Planetengetriebes 3 nach Art eines Bajonettverschlusses in der topfartigen Abtriebscheibe 5 angeordnet und axial gelagert. Hierzu sind am äußeren Rand des Planetenträgers 30b der zweiten Getriebestufe Aussparungen 37 vorgesehen, die über entsprechende, nach innen vorspringende Stege 51 der Abtriebscheibe 5 (in axialer Richtung) geschoben werden können. Sobald der Planetenträger 30b in axialer Richtung bis auf den Boden 50 der topfartigen Abtriebscheibe 5 geschoben wurde, kann dieser relativ zu der Abtriebscheibe 5 um die gemeinsame Drehachse verdreht werden, wobei der äußere Rand des Planetenträgers 30b der zweiten Getriebestufe in Hinterschnitte eingreift, die zwischen den einzelnen, radial nach innen vorspringenden Stegen 51 und dem Boden 50 der topfartigen Abtriebscheibe 5 ausgebildet sind. Hierdurch ist der Planetenträger 30b der zweiten Getriebestufe axial zwischen dem Gehäuseboden 50 und den Stegen 51 der Abtriebsscheibe 5 gelagert und parallel zur Antriebsscheibe geführt (gegen Verkippen gesichert).

Die Abtriebscheibe 5 selbst wiederum ist dadurch gegen Verkippen gesichert, dass sie drehfest (vorzugsweise einstückig) mit einem koaxial angeordneten Formschlusselement 58 verbunden ist, welches der Herstellung einer formschlüssigen Verbindung mit einer Seiltrommel 6 dient, die einen dem Formschlusselement 58 zugeordneten Formschlussbereich 68 aufweist und deren äußere Oberfläche 60 Rillen zur Führung des Antriebseiles eines Seilfensterhebers aufweist. Durch das drehfest mit der Abtriebscheibe 5 verbundene und sich in axialer Richtung erstreckende Formschlusselement 58 wird die effektive axiale Stützlänge der Abtriebscheibe 5 maximiert und hierdurch eine Verkippsicherung (gegen Verkippen bezüglich der Antriebsachse 10) geschaffen.

Mit seinen zwischen den Anschlägen 55a, 55b; 56a, 56b verlaufenden Innenflächen 53, 54 bildet das Abtriebselement 5 zusammen mit dem inneren Gehäuseteil 2b zudem eine Führung für die Schaltelement 43, 44 sowie die Dämpfungselemente 45a, 45b; 46a, 46b, über die die Schaltklauen 35, 36 des Planetenträgers 30b der zweiten Getriebestufe auf die Abtriebscheibe 5 einwirken können.

Die Abtriebscheibe 5 umgreift den Planetenträger 30b der zweiten Getriebestufe sowie die Schlingfeder 4 topfförmig und liegt dabei insbesondere an dem Dichtungsring R des inneren, getriebeseitigen Gehäuseteiles 2b an. Hierdurch trägt sie zur Abdichtung des Verstellantriebs bei.

Die der Abtriebscheibe 5 nachgeordnete Seiltrommel 6 ist wiederum in einem eigenen Gehäuseteil 2c in Form eines Lagerdeckels angeordnet, der über Befestigungsstellen 200c mit den weiteren Gehäuseteilen 2a, 2b befestigt ist. Der Lagerdeckel 2c dient außerdem zum radialen Abstützen der feststehenden Achse 10 des Verstellantriebs an ihrer dem äußeren, scheibenläuferseitigen Gehäuseteil 2a abgewandten Ende, wobei die feststehende Achse 10 an diesem Gehäuseteil 2a beispielsweise durch Nieten befestigt ist und an jenem Lagerdeckel in eine Lageröffnung ragt und dort radial fixiert ist.

Die Befestigungsstellen 200a, 200b, 200c der einzelnen Gehäuseteile 2a, 2b, 2c können ein Referenzpunktsystem zur Ausrichtung und Positionierung der Gehäuseteile 2a, 2b, 2c zueinander sowie des gesamten Verstellantriebs 1, 2a, 2b, 3, 4, 5 zuzüglich der Seiltrommel 6 an einem tragenden Kraftfahrzeugteil, wie z. B. einem Türblech, dienen.

Während die Seiltrommel 6 und die Abtriebsscheibe 5 vorzugsweise aus Kunststoff bestehen, sind der Scheibenläufer 1, das Planetengetriebe 3, die Schlingfeder 4, der Lagerdeckel 2c sowie die beiden Gehäuseteile 2a, 2b des Verstellantriebs vorzugsweise aus Metall gefertigt.

Ein wichtiges Charakteristikum des in den Figuren 1, 2 und 3 dargestellten Verstellantriebs liegt darin, dass es sich hierbei um einen in axialer Richtung sehr flachen Antrieb handelt, bei dem die übliche Trennung zwischen Motor und nachgeordnetem Verstellgetriebe insofern aufgehoben ist, als der elektromechanische Energiewandler 1, 22, der die Motorfunktion übernimmt, sowie die nachgeordneten Getriebebaugruppen 3, 5 zu einer Einheit zusammengefasst sind, die in bzw. an einem einzigen zweiteiligen Antriebsgehäuse 2a, 2b gelagert ist und die neben der Umwandlung elektrischer Energie in mechanische Energie auch die Übersetzung des Antriebsmomentes zur Abtriebseite hin übernimmt. Die Schlingfederbremse ist dabei an diesen flachbauenden Antrieb so angepasst, dass sie keinen zusätzlichen Bauraum in axialer Richtung erfordert.

Figur 4 zeigt weitere Einzelheiten hinsichtlich der geometrischen Ausbildung der Magnete 22, die entsprechend Figur 1 b die feststehende Achse 10 ringförmig umgreifend an dem inneren, getriebeseitigen Gehäuseteil 2b festgelegt sind. Hierzu ist in Figur 4 der aus elektrischen Leitern L gebildete Scheibenläufer 1 schematisch zusammen mit einem der vor einer Oberfläche des Scheibenläufers 1 angeordneten Magnete 22 dargestellt.

Die den Scheibenläufer 1 bildenden elektrischen Leiter L liegen in Form von vorzugsweise flachen, gestanzten Wicklungen vor, von denen zwei Wicklungsabschnitte W1, W2 einer Wicklung in Figur 4 durch teilweises Aufschneiden des Scheibenläufers 1 beispielhaft hervorgehoben sind. Dabei wird insbesondere deutlich, dass die äußere Kontur des Magnetes 22 an den Verlauf der Wicklungen (z. B. der Wicklungsabschnitte W1, W2) des Scheibenläufers 1 angepasst ist. Auf seiner dem Mittelpunkt M des Scheibenläufers 1 abgewandten Seite wird die äußere Kontur 22b des Magneten 22 gebildet durch einen Kreisbogenabschnitt mit einem Radius R2, welcher derart gewählt ist, dass der dem Mittelpunkt M des Scheibenläufers 1 abgewandte Kreisbogenabschnitt 22b in seiner Krümmung an die Krümmung der Wicklungen W1, W2 angenähert ist. An seiner dem Mittelpunkt M des Scheibenläufers 1 zugewandten Seite wird der Magnet 22 durch einen weiteren Kreisbogenabschnitt 22a begrenzt, dessen Radius R1 > R2 durch den Abstand zum Mittelpunkt M des Scheibenläufers 1 bestimmt ist. Die Magnete 22 sind hierdurch auf ihrer dem Mittelpunkt M des Scheibenläufers 1 zugewandten Seite derart beschnitten, dass sie der Kontur der Wicklungen W1, W2 an deren dem Mittelpunkt M des Scheibenläufers 1 zugewandten Endabschnitten nicht mehr folgen.

Im Ergebnis zeichnen sich die zum Betreiben des Scheibenläufers 1 verwendeten Magnete 22, deren Magnetfelder mit den stromdurchflossenen Wicklungen W1, W2 des Scheibenläufers 1 zusammenwirken, dadurch aus, dass sie einerseits mit ihrer äußeren Kontur 22a, 22b weitgehend an den Verlauf der Wicklungen W1, W2 angepasst sind. Dabei ist jedoch andererseits eine kostengünstige Herstellbarkeit der Magnete 22 gewährleistet, da deren äußere Kontur 22a, 22b im Querschnitt durch zwei Kreisbogenabschnitte 22a und 22b gegeben ist.

Anhand der Figuren 5a bis 5c wird nachfolgend die Einleitung des am Scheibenläufer 1 erzeugten und mittels des Übersetzungsmechanismus in Form eines Planetengetriebes 3 übersetzten Antriebsmomentes in die Abtriebscheibe 5 unter gleichzeitiger Freischaltung der Schlingfederbremse beschrieben.

Dabei zeigt Figur 5a zunächst den Planetenträger 30b der zweiten Getriebestufe, der zur drehbaren Lagerung der entsprechenden Planetenträger 34 dient, zusammen mit der topfartigen Abtriebscheibe 5, in der der Planetenträger 30b aufgenommen und gelagert ist.

Zum Zusammenführen des Planetenträgers 30b und der Abtriebscheibe 5 wird der Planetenträger 30b auf die Bodenfläche 50 (vergleiche Figur 1b) der topfartigen Abtriebscheibe 5 gelegt, wobei die Aussparungen 37 am äußeren Rand des Planetenträgers 30b entlang jeweils eines der nach innen vorspringenden Stege 51 der Abtriebscheibe 5 geführt werden. Sobald der Planetenträger 30b auf dem Boden 50 der Abtriebscheibe 5 aufliegt, wird dieser geringfügig relativ zu der Abtriebscheibe 5 verdreht, so dass die Ausnehmungen 37 am Rand des Planetenträgers 30b außer Eingriff mit den Stegen 51 gelangen. Hierdurch wird der äußere Rand des Planetenträgers 30b formschlüssig in Hinterschnitten 52 aufgenommen, die zwischen den Stegen 51 und dem Boden 50 der Abtriebscheibe 5 ausgebildet sind. Durch diese axiale Sicherung des Planetenträgers 30b an der Abtriebscheibe 5 wird ein Verkippen des Planetenträgers 30b relativ zu der Abtriebscheibe 5 verhindert (nach Art eines axial wirkenden Bajonettverschlusses). Gleichzeitig sind der Planetenträger 30b und die Abtriebscheibe 5 um die feststehende Achse 10 des Verstellantriebs begrenzt zueinander verdrehbar, was für die Übertragung des Antriebsmomentes von dem Planetenträger 30b auf die Abtriebscheibe 5 unter Zwischenschaltung einer Schlingfederbremse von Bedeutung ist.

Figur 5b zeigt die aus dem Planetenträger 30b der zweiten Getriebestufe und der Abtriebscheibe 5 bestehende Getriebebaugruppe zusammen mit dem am inneren, getriebeseitigen Gehäuseteil 2b (vergleiche Figuren 1 und 2) ausgebildeten bzw. als separates Teil im Gehäuse befestigten Hohlrad 25 für die Planeten 32, 34 des Planetengetriebes 3 und der Schlingfeder 4. Die Schlingfeder 4 umgreift die zylindrisch ausgebildete Ringfläche am inneren Gehäuseteil 2b bzw. das Hohlrad 25, so dass dessen ringartige, zylindrische Außenwand als Bremsfläche für die Spiralfeder 4 dient. D. h., zur Sperrung eines abtriebseitig eingeleiteten Drehmomentes legt sich die Schlingfeder 4 radial nach Innen mit entsprechend großer Kraft an die Bremsfläche 24 des inneren Gehäuseteiles 2b an.

Für die Betätigung der Schlingfeder 4 sowohl zum Freischalten der Schlingfederbremse beim Einleiten eines antriebseitigen Drehmomentes als auch zum Sperren der Schlingfederbremse bei abtriebseitiger Einleitung eines Drehmomentes dienen die beiden Federenden 41, 42, die jeweils radial von der Schlingfeder abstehen und mit einem an den Federenden 41, 42 befestigten, insbesondere dort aufgesteckten, Schaltelement 43, 44 versehen sind. Die Schaltelemente 43, 44 ermöglichen eine definierte Einleitung von Schaltkräften und großen Sperrkräften in die Schlingfeder 4, ohne dass sich die Federenden 41, 42 verbiegen. Hierdurch sind bei einer gegebenen Dicke des Federdrahtes größere Momente, z. B. als Folge eines Einbruchsversuchs durch Herunterdrücken einer Fensterscheibe, übertragbar. Dadurch, dass die Schaltelemente 43, 44 in ihrer Kontur an die Krümmung der Innenwand der topfförmigen Abtriebscheibe 5 angepasst sind, können sie sich radial nach außen an dieser abstützen, so dass die entsprechenden Wandbereiche 53, 54 der Innenwand der topfförmigen Abtriebscheibe 5 zugleich als Führungsbereiche zur radialen Führung der Schaltelemente 43, 44 in Umfangsrichtung dienen. Die axiale Führung der Schaltelemente 43, 44 erfolgt vorzugsweise über die Federenden 41, 42 und eine Anlagefläche 26 der Schaltelemente 43, 44 am inneren Gehäuseteil 2b, um axiale Kräfte aus den Schaltelementen bei gesperrter Schlingfederbremse in das besagte Gehäuseteil 2b einzuleiten.

Darüber hinaus ermöglichen die Schaltelemente 43, 44 eine vergleichsweise großflächige Krafteinleitung in die Federenden 41, 42 und die Dämpfungselemente 45a, 46b mittels der Schaltklauen 35, 36 des Planetenträgers 30b der zweiten Getriebestufe, wobei die mit den Schaltklauen 35, 36 zusammenwirkenden Anschlagflächen der Schaltelemente 43, 44 als Druckstücke die Krafteinleitung vergleichmäßigen.

Die am Planetenträger 30b vorgesehenen Schaltklauen 35, 36 dienen dabei nicht nur zum Freischalten der Schlingfederbremse bei antriebseitiger Einleitung eines Drehmomentes, sondern sie dienen auch als Krafteinleitungs- bzw. Kraftübertragungselemente, um das antriebseitig wirkende Drehmoment je nach Drehrichtung über das Schaltelement 43 oder 44 und die Dämpfungselemente 45a, 46a oder 46b, 45b auf die Abtriebscheibe 5 zu übertragen. Hierzu sind an der Abtriebscheibe 5 entsprechend Anschlagflächen 55a, 56a und 56b, 55b vorgesehen, die jeweils von der Innenwand der topfförmigen Antriebscheibe 5 nach innen vorstehen und von denen jeder der in die Abtriebscheibe 5 eingreifenden Schaltklauen 35, 36 jeweils zwei (55a, 55b bzw. 56a, 56b) zugeordnet sind. Von jedem Paar 55a, 55b bzw. 56a, 56b an Anschlagflächen, die jeweils einem Kraftübertragungs- bzw. Krafteinleitungselement in Form einer Schaltklaue 35, 36 zugeordnet sind, wird bei einer Drehbewegung des Verstellantriebs je Schaltklaue 35, 36 - in Abhängigkeit von der jeweiligen Drehrichtung - nur eine Anschlagfläche 55a oder 55b bzw. 56a oder 56b wirksam, in dem sie mit der zugeordneten Schaltklaue 35 oder 36 (mittelbar über Dämpfungselemente 45a, 45b; 46a, 46b) in Wirkverbindung tritt.

Zur Dämpfung eines antriebseitig mittels der Schaltklauen 35, 36 über die zugeordneten Anschlagflächen 55a, 55b; 56a, 56b in die Abtriebscheibe 5 eingeleiteten Drehmomentes, insbesondere wenn der Verstellantrieb abtriebseitig an einen Block fährt, z. B. weil eine zu verstellende Fensterscheibe ihre endgültige Schließposition in einer oberen Scheibendichtung erreicht hat, dienen Dämpfungselemente 45a, 45b; 46a, 46b, die mit einem als Steckelement dienenden Fortsatz in jeweils eine der als Gegenstecker ausgebildeten Anschlagflächen 55a, 55b; 56a, 56b der Abtriebscheibe 5 eingesteckt sind.

Es wird nun anhand Figur 5c beispielhaft für eine Drehbewegung entlang einer ersten Richtung A (entsprechend einer Linksdrehung in der Ansicht gemäß Figur 5c) die Einleitung eines antriebsseitig am Scheibenläufer 1 erzeugten Antriebsmomentes über das Planetengetriebe 3 in die Abtriebscheibe 5 unter gleichzeitiger Freischaltung der Schlingfederbremse beschrieben.

Eine Drehbewegung des Scheibenläufers entlang einer ersten Drehrichtung A um die feststehende Achse 10 des Verstellantriebs führt zu einer gleichsinnigen Bewegung des Planetenträgers 30b der zweiten Planetenstufe, jedoch - entsprechend der gewählten Übersetzung - mit geringerer Geschwindigkeit und größerem Antriebsmoment. Zur Einleitung des entsprechenden Drehmomentes in die Abtriebsscheibe 5 dienen die beiden Schaltklauen 35, 36 des Planetenträgers 30b. Wie anhand Figur 5c erkennbar, wirkt bei einer Drehbewegung des Planetenträgers 30b entlang der ersten Drehrichtung A die eine Schaltklaue 35 auf das Schaltelement 43 des einen Federelementendes 41 ein und hat hierdurch die Tendenz, die Schlingfeder 4 radial aufzuweiten, so dass sie in radialer Richtung r (bezogen auf die Antriebsachse 10) von der Bremsfläche 24 der Schlingfederbremse abgehoben wird. Hierdurch ist die Schlingfederbremse freigeschaltet und ein antriebsseitig wirkendes Drehmoment kann ohne entgegenstehende Sperrwirkung der Schlingfederbremse auf die Abtriebsscheibe 5 übertragen werden. Hierzu wirkt die Schaltklaue 35 über das Schaltelement 43 und ein Dämpfungselement 45a, das zwischen das Schaltelement 43 des einen Federendes 41 und einer Anschlagfläche 55a der Abtriebsscheibe 5 angeordnet ist, auf jene Anschlagfläche 55a ein, wobei das elastische Dämpfungselement 45a in Umfangsrichtung zusammengedrückt (komprimiert) wird. Gleichzeitig wirkt die weitere Schaltklaue 36 des Planetenträgers 30b über ein weiteres Dämpfungselement 46a entlang der gleichen Richtung A auf eine weitere Anschlagfläche 56a der Abtriebsscheibe 5 ein, wobei auch dieses Dämpfungselement 46a komprimiert wird. Hierdurch wird eine Drehbewegung der Abtriebsscheibe 5 entlang derselben Drehrichtung A ausgelöst, entlang der sich auch der Planetenträger 30b der zweiten Getriebestufe (ausgelöst durch eine Drehbewegung des Scheibenläufers 1) bewegt.

Diese Bewegung wird fortgeführt, so lange der Scheibenläufer 1 bestromt ist und sich dreht, wobei die über ein Zugmittel Z in Form eines Antriebsseiles (vergleiche Figur 3) mit der Seiltrommel 6 (vergleiche Figuren 1, 2 und 3) des Verstellantriebs gekoppelte Fensterscheibe einer Kraftfahrzeugtür beispielsweise angehoben wird (entsprechend einem Absenken der Fensterscheibe bei einer entgegengesetzten Drehbewegung der Abtriebsscheibe 5 entlang einer Richtung B).

Die Drehbewegung der Abtriebsscheibe 5 (und damit der nachgeordneten Seiltrommel 6) sowie das entsprechende Anheben der zu verstellenden Fensterscheibe enden, wenn die Bestromung des Scheibenläufers 1 endet (bzw. wenn die Fensterscheibe ihre obere Schließposition in einer Scheibendichtung erreicht hat und der Antrieb automatisch abgeschaltet wird). Beim Anfahren eines Blocks (also beispielsweise dem Erreichen der oberen Schließposition einer Fensterscheibe) kommt es zu einer verstärkten Deformation der bei der entsprechenden Drehrichtung A aktiven Dämpfungselemente 45a, 46a, über die die beiden Schaltklauen 35, 36 auf die zugeordneten Anschlagflächen 55a, 56a der Abtriebsscheibe 5 einwirken, wodurch das maximale, an der Abtriebsscheibe 5 bzw. der Seiltrommel 6 wirkende Moment begrenzt wird, um neben Spitzenbelastungen und Verschleiß des Verstellantriebs auch Anschlaggeräusche abzuwenden.

Nach dem manuellen oder automatischen (beim Erreichen einer Endposition des Verstellteiles) Abschalten des Verstellantriebs (durch Unterbrechung der Stromversorgung für den Scheibenläufer 1) entspannen sich die bei der jeweiligen Drehrichtung aktiven Dämpfungselemente 45a, 46a wieder, wobei das eine Dämpfungselement 45a derart auf das Schaltelement 43 des einen Endes 41 der Schlingfeder 4 einwirkt, dass diese wieder radial gegen die zugeordnete Bremsfläche 24 gedrückt wird und die Schlingfederbremse wieder sperrt. Dies ist darauf zurückzuführen, dass das sich entspannende Dämpfungselement 45a auf das zugeordnete Schaltelement 43 des einen Federendes 41 genau entgegengesetzt zu der Richtung A einwirkt, entlang derer zuvor die Schaltklaue 35 auf das Schaltelement 43 dieses Federendes 41 eingewirkt hatte, um die Schlingfederbremse frei zu schalten und außerdem die Drehbewegung entlang der gewünschten Drehrichtung A auszulösen. Bei der Entspannung des entsprechenden der Dämpfungselemente 45a kommt es zu einer geringfügigen Rückstellbewegung der Abtriebsscheibe 5 und der Seiltrommel 6 und damit auch des hiermit eingestellten Verstellteils (entsprechend z. B. einem geringfügigen Absenken einer zuvor in ihre obere Schließposition gefahrenen Fensterscheibe). Das Schlingfedersystem ist konstruktiv derart auszulegen, dass dieses Rückstellverhalten keine substanzielle Einwirkung auf die zuvor angefahrene Verstellposition des entsprechenden Verstellteiles hat, also z. B. eine Fensterscheibe nicht wieder aus der oberen Scheibendichtung herausgerät, in die sie zuvor eingefahren wurde. Dies wird vor allem dadurch sichergestellt, dass sich das jeweilige Schlingfederende 41 bzw. 42 beim Freischalten nicht oder nur geringfügig von der Bremsfläche 24 abhebt.

Ferner ist sicherzustellen, dass durch das Entspannen der Dämpfungselemente 45a, 46a keine so starke Rückwirkung auf die zugeordneten Schaltklauen 35, 36 erfolgt, dass die eine Schaltklaue 36 unter Überwindung des Umkehrspieles U des Sperrmechanismus nun über das andere Schaltelement 44 das entsprechende Schlingfederende 42 entgegengesetzt bewegt, die Schlingfeder löst und so eine Drehbewegung entlang der entgegengesetzten Richtung B auslösen könnte; es muss also ein Restumkehrspiel im Sperrmechanismus verbleiben. Hierzu kann unterstützend vorgesehen sein, dass der Planetenträger 30b der zweiten Getriebestufe, z. B. im Bereich der Hinterschnitte 52, über keil- bzw. rampenartige Flächenpaare bei einer Rückstellbewegung mit der Abtriebsscheibe 5 zusammenwirkt, so dass der Planetenträger 30b und die Abtriebsscheibe 5 beispielsweise axial ineinander verspannt werden und die Rückstellbewegung gebremst wird. Alternativ oder ergänzend kann auch eine axiale Verspannung zwischen dem Planetenträger 30b und der Abtriebsscheibe 5 durch entsprechende Auslegung der Dämpfungselemente 45a, 45b; 46a, 46b erreicht werden. Hierbei kann durch die Querschnittsvergrößerung der zusammengedrückten (inkompressiblen/Volumenkostanten) Dämpfer im Block ebenfalls eine axiale Verspannung von Abtriebsscheibe 5 und Planetenträger 30b erreicht werden.

Weiterhin kann vorgesehen sein, dass die elektrischen Anschlüsse des Verstellantriebs, also insbesondere des Scheibenläufers 1, beim Abschalten des Verstellantriebs kurzgeschlossen werden, um einen antriebsseitigen temporären Beharrungseffekt durch Gegeninduktion zu erzeugen, also einer Rückstellbewegung des Verstellantriebs temporär entgegengewirkt wird, bis sich das Dämpfungselement 46a bzw. 45b entspannt hat.

Bei einer Drehbewegung des Verstellantriebs entlang der entgegengesetzten Richtung B laufen die gleichen Prozesse ab, wie zuvor anhand der Drehbewegung einer ersten Drehrichtung A beschrieben, wobei jedoch eine Schaltklaue 36 die Schlingfeder 4 über das andere Federende 42 mit einem zugeordneten Schaltelement 44 frei schaltet und zusammen mit der weiteren Schaltklaue 35 über Dämpfungselemente 45b, 46b auf entgegengesetzt gerichtete Anschlagflächen 55b, 56b der Antriebsscheibe 5 einwirkt.

Das heißt, in Abhängigkeit von der Drehrichtung A, B wirken die Schaltklauen 35, 36 zum Freischalten der Schlingfederbremse jeweils auf das eine oder andere Federende 41, 42 derart ein, dass die Schlingfeder 4 aufgeweitet wird, und sie wirken ferner über Dämpfungselemente 45a, 46a bzw. 45b, 46b entlang der einen Richtung A oder entlang der anderen Richtung B auf jeweils geeignet orientierte Anschlagflächen 55a, 56a bzw. 55b, 56b der Abtriebsscheibe 5 ein, um diese nach dem Freischalten (Lösen) der Schlingfederbremse entlang der gewünschten Drehrichtung A oder B zu bewegen.

Die Sperrwirkung der Schlingfederbremse bei abtriebsseitiger Einleitung eines Drehmomentes beruht darauf, dass in diesem Fall je nach Richtung des abtriebsseitig eingeleiteten Drehmomentes ein Anschlag 55a oder 56b über das zugeordnete Dämpfungselement 45a oder 46b derart auf das Schaltelement 43 oder 44 eines jeweiligen Federendes 41 bzw. 42 einwirkt, dass sich die Schlingfeder 4 radial zusammenzieht und in radialer Richtung r gegen die Bremsfläche 24 gedrückt wird, wodurch eine Drehbewegung kraft- und reibschlüssig blockiert ist.

Die Schlingfederbremse wird also jeweils dadurch gelöst bzw. gesperrt, dass entweder ein antriebsseitiges Kraftübertragungselement (Schaltklauen 35, 36 des Planetenträgers 30b der zweiten Getriebestufe) derart auf ein Federende 41, 42 einwirken, dass sich die Schlingfeder 4 von der Bremsfläche 24 löst bzw. die radiale Vorspannung reduziert wird, oder ein abtriebsseitig angeordnetes Kraftübertragungselement (Anschlagflächen 55a, 56b der Abtriebsscheibe 5) derart auf eines der Federenden 41, 42 einwirkt, dass die Schlingfeder 4 radial zusammengedrückt wird und sich gegen die Bremsfläche 24 legt.

Die abtriebsseitigen Kraftübertragungselemente wirken dabei auf das jeweilige Federende 41 oder 42 jeweils entgegengesetzt der Richtung ein, entlang der die antriebsseitigen Kraftübertragungselemente auf das entsprechende Federende einwirken. Hierdurch bewirken die einen ein Zusammendrücken und die anderen ein Aufweiten der Schlingfeder 4.

Die Funktion des erfindungsgemäßen Verstellantriebs wurde vorliegend in den Figuren 1 bis 5c beispielhaft anhand einer Anwendung erläutert, bei der der Verstellantrieb zur Erzeugung einer Drehbewegung einer Seiltrommel 6 eines Kraftfahrzeugfensterhebers dient und dementsprechend ein Anheben oder Absenken einer Fensterscheibe in einer Kraftfahrzeugtür bewirkt. Der Verstellantrieb kann jedoch in entsprechender Weise zur Einstellung beliebiger anderer Verstellteile, wie z. B. verstellbarer Sitzteile oder sonstiger Kraftfahrzeugteile, sowie auch zur Einstellung von Verstellteilen außerhalb von Kraftfahrzeugteilen dienen.

Ein wichtiger Vorteil des beschriebenen Verstellantriebs liegt in seiner geringen Bauhöhe in axialer Richtung, so dass dessen Anwendung in solchen Fällen bevorzugt ist, in denen in axialer Richtung nur wenig Bauraum für einen Verstellantrieb zur Verfügung steht, wie beispielsweise in Kraftfahrzeugtüren oder an Fahrzeugsitzen. Die geringe axiale Ausdehnung des Verstellantriebs wird dadurch erreicht, dass die als Bremse dienende Schlingfeder 4 den Übersetzungsmechanismus des Verstellantriebs (z. B. in Form eines Planetengetriebes 3) an seinem Umfang umschließt und dadurch keinen zusätzlichen Bauraum in axialer Richtung erfordert. Die Schaltelemente zum Betätigen der Schlingfeder 4 sowie die Kraftübertragungselemente und Dämpfungselemente zur Übertragung antriebsseitig eingeleiteter Kräfte auf die Abtriebsseite sind wiederum am äußeren Umfang der Schlingfeder 4 angeordnet, so dass auch deren Anordnung zu einer Minimierung der Bauhöhe in axialer Richtung beiträgt.

Insgesamt liegen also der Übersetzungsmechanismus des Verstellantriebs, die Schlingfederbremse sowie die Schalt-, Kraftübertragungs- und Dämpfungselemente, mittels derer der Übersetzungsmechanismus an das Abtriebselement gekoppelt ist und die Schlingfederbremse geschaltet wird, in einer gemeinsamen Ebene senkrecht zur Antriebsachse 10 und dabei - in radialer Richtung betrachtet - auf radial hintereinander angeordneten Schalen.

Abweichend von der Darstellung in den Figuren 1 bis 5c kann dabei die der Schlingfeder 4 zugeordnete Bremsfläche auch radialer außerhalb der Schlingfeder 4 am inneren, getriebeseitigen Gehäuseteil 2b angeordnet sein, so dass die Schlingfeder 4 zur Erzielung einer Bremswirkung aufgeweitet werden muss und beim Lösen der Schlingfederbremse zusammengedrückt werden muss, weil in diesem Fall die Bremsfläche die Schlingfeder 4 ringförmig umgibt. Es ist dann bevorzugt, die Schalt-, Kraftübertragungs- und Dämpfungselemente radial innerhalb (statt außerhalb wie im gezeigten Ausführungsbeispiel) anzuordnen. Insbesondere würden die Federenden in diesem Fall von der Schlingfeder radial nach innen (statt radial nach außen) abstehen.

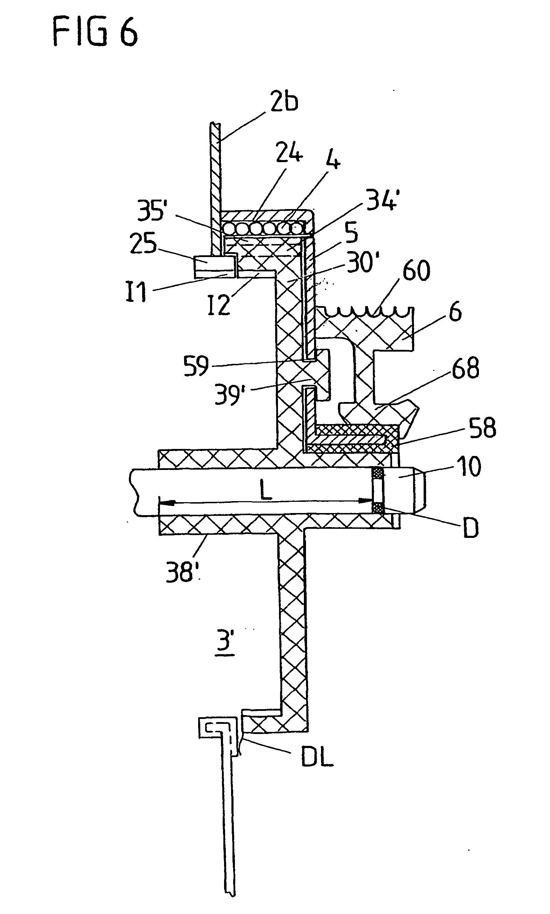

Anhand der Figuren 6 bis 8 werden nachfolgend Abwandlungen des in den Figuren 1 a bis 3 dargestellten Verstellantriebs beschrieben, und zwar insbesondere hinsichtlich des Übersetzungsmechanismus, der der Übertragung des am Scheibenläufer 1 erzeugten Drehmomentes auf das Abtriebselement 5 (und die Seiltrommel 6) dient.

Die den Ausführungsbeispielen gemäß Figur 6 bis 8 zugrunde liegenden Übersetzungsgetriebe basieren z.B. auf einem sogenannten "Harmonic-Drive-Getriebe" als Untersetzungsgetriebe. Ein derartiges Getriebe umfasst zwei koaxial gelagerte Hohlräder, die eine (geringfügig) unterschiedliche Zähnezahl aufweisen und über ihre jeweilige Verzahnung mit einem gemeinsamen Antriebselement in Wirkverbindung stehen. Eine Übersetzung wird dabei durch die unterschiedliche Zähnezahl der beiden Hohlräder erreicht.

Konkret umfasst ein derartiges Untersetzungsgetriebe beispielsweise ein gehäusefestes erstes Hohlrad, das ein zylindrische Innenverzahnung mit einer ersten Zähnezahl aufweist; ein Abtriebshohlrad, das eine zylindrische Innenverzahnung mit einer zweiten Zähnezahl aufweist; einen radial flexiblen Ring mit einer Innenmantelfläche und einer Außenverzahnung, die mit den Innenverzahnungen des gehäusefesten Hohlrades und des Abtriebshohlrades in Eingriff steht; sowie einen Antriebskem, der einen oder mehrere Umfangsabschnitte der Außenverzahnung des radial flexiblen Ringes mit der Innenverzahnung des gehäusefesten Hohlrades und des Abtriebshohlrades umlaufend in Eingriff hält. Aufgrund der unterschiedlichen Zähnezahl der beiden Innenverzahnungen bewirkt eine ganze Umdrehung des mittels eines geeigneten elektromechanischen Wandlers (Scheibenläufers) anzutreibenden Antriebskems eine Drehbewegung des Abtriebshohlrades um die vorgesehene Differenz der Zähnezahl von gehäusefestem Hohlrad und Abtriebshohlrad. Dadurch kann mit einem derartigen Getriebe eine sehr hohe Übersetzung, insbesondere in Form einer Untersetzung, erreicht werden.

Hinsichtlich weiterer Einzelheiten des Aufbaus eines derartigen Getriebes sei auf die DE 100 24 905 A1 und die DE 100 24 908 A1 verwiesen. Vergleichbare Getriebe sind außerdem in der DE 199 44 915 A1 und der DE 100 24 907 A1 beschrieben, insbesondere unter Verwendung eines Scheibenläufers zur Erzeugung eines antriebsseitigen Drehmomentes.

Figur 6 zeigt die Anwendung eines Übersetzungsmechanismus (Übersetzungsgetriebes) der vorstehend genannten Art auf einen Verstellantrieb mit einer Schlingfederbremse, wie er in den Figuren 1 bis 3 dargestellt ist. Dabei ersetzt das auf der Relativbewegung zweier Hohlräder mit unterschiedlicher Zähnezahl basierende Übersetzungsgetriebe den durch ein Planetengetriebe gebildeten Übersetzungsmechanismus aus den Figuren 1 und 2 und kann z.B. als Übersetzungsgetriebe 3 bei dem Verstellantrieb aus Fig. 3 eingesetzt werden.

Gemäß Figur 6 ist ein erstes, gehäusefestes Hohlrad 25 mit einer ersten Innenverzahnung I1 am inneren, getriebeseitigen Gehäuseteil 2b des Verstellantriebs befestigt und ein koaxial hierzu auf der feststehenden Antriebsachse 10 gelagertes Abtriebshohlrad 30' über eine formschlüssige Verbindung mittels Rastelementen 39', 59 nach Art eines Bajonettverschlusses axial an der topfartigen Abtriebsscheibe 5 des Verstellantriebs gelagert. Die Innenverzahnungen I1, I2 des gehäusefesten Hohlrades 25 einerseits und des koaxial hierzu drehbar auf der Antriebsachse 10 gelagerten Abtriebshohlrades 30' andererseits weisen eine geringfügig unterschiedliche Zähnezahl auf. Indem ein Antriebselement mit einer Außenverzahnung, z. B. ein radial flexibler Ring, der von dem in Figur 6 nicht dargestellten, auf der Antriebsachse 10 gelagerten Scheibenläufer angetrieben wird, mit seiner Außenverzahnung mit den beiden Innenverzahnungen I1, I2 der Hohlräder 25, 30' in Eingriff steht, wird die Drehbewegung des Scheibenläufers untersetzt. Denn jede Umdrehung des Scheibenläufers bzw. des hierdurch angetriebenen, mit den Innenverzahnungen I1, I2 der Hohlräder 25, 30' in Eingriff stehenden Antriebselementes bewirkt eine Drehbewegung des Abtriebshohlrades 30' entsprechend der Differenz der Zähnezahl der beiden Innenverzahnungen I1, I2. Für weitere Einzelheiten hinsichtlich der Erzeugung einer Drehbewegung eines hierfür geeigneten Antriebselementes mittels eines Scheibenläufers sowie hinsichtlich der Ausbildung des Antriebselementes, insbesondere als radial flexibler Ring mit einer Außenverzahnung und einem zugeordneten Antriebskem, sei beispielhaft auf die bereits erwähnten Dokumente DE 199 44 915 A1, DE 100 24 905 A1, DE 100 24 907 A1 und DE 100 24 908 A1 verwiesen.

Das gehäusefeste Hohlrad 25 mit der ersten Innenverzahnung l1 ist dabei vorzugsweise an das innere Gehäuseteil 2b (insbesondere ein Blechprägeteil) angespritzt. Bei dem Abtriebshohlrad 30' handelt es sich vorzugsweise um ein Kunststoffspritzgussteil, das mit Rastelementen 39' versehen ist, die nach Art eines Bajonettverschlusses in zugehörige Rastöffnungen 59 der Abtriebsscheibe 5 (insbesondere ein Blechprägeteil) eingreifen können, um eine axiale Lagerung und Führung der Abtriebsscheibe 5 durch das Abtriebshohlrad 30' zu bewirken, welches über einen axial längserstreckten zentralen Lagerbereich 38' mit großer Stützlänge L auf der Antriebsachse 10 gelagert ist.

Die topfförmige Abtriebsscheibe 5 weist ein axial erstrecktes Formschlusselement 58 auf, welches mit einer Kunststoffumspritzung beschichtet ist und einerseits auf seiner radial inneren Seite zur radialen Lagerung der Abtriebsscheibe 5 auf dem Lagerabschnitt 38' des Abtriebshohlrades 30' dient und andererseits mit seiner äußeren Seite zur formschlüssigen Befestigung einer Seiltrommel 6 dient, welche hierfür einen zugeordneten Formschlussbereich 68 aufweist. Die beiden Formschlussbereiche 58, 68 von Abtriebsscheibe 5 und Seiltrommel 6 können dabei insbesondere über Verzahnungselemente aneinander befestigt sein, z.B. indem das Formschlusselement 58 der Abtriebsscheibe 5 an seiner Außenseite als Vielzahnkonus ausgebildet ist. Der die Seiltrommel 6 aufnehmende Lagerdeckel 2c (vergleiche Figuren 1a und 1b) ist in Figur 6 der Übersichtlichkeit halber nicht mit dargestellt.

Das Abtriebshohlrad 30' und die Abtriebsscheibe 5 sind begrenzt zueinander verdrehbar, wie in den Figuren 1 bis 3 für den Planetenträger 30b der zweiten Getriebestufe und die Abtriebsscheibe 5 beschrieben. Über das Abtriebshohlrad 30' wird das am Scheibenläufer erzeugte Antriebsmoment auf die Abtriebsscheibe 5 mittels geeigneter Schaltklauen 35' übertragen, die gleichzeitig auch zum Betätigen (Schalten) der Schlingfeder 4 dienen, wobei ferner Aufnahmebereiche 34' für geeignete Dämpfungselemente vorgesehen sind. Das Abtriebshohlrad 30' übernimmt hinsichtlich des Zusammenwirkens mit der topfartigen Abtriebsscheibe 5 die Funktion des Planetenträgers 30b der zweiten Getriebestufe des Planetengetriebes 3 aus den Figuren 1 bis 3. Bezüglich des Zusammenwirkens des Abtriebshohlrades 30' mit der topfartigen Abtriebsscheibe 5 (sowohl bei antriebsseitiger Einleitung eines Drehmomentes als auch bei abtriebsseiger Einleitung eines Drehmomentes) sei daher auf die entsprechenden Ausführungen zu dem Zusammenwirken des Planetenträgers 30b der zweiten Planetenstufe mit der Abtriebsscheibe 5 verwiesen, wie anhand der Figuren 1 bis 5c beschrieben. Dies gilt insbesondere auch für die Einbeziehung von Dämpfungselementen, der Schlingfederbremse sowie den an den Federenden der entsprechenden Schlingfeder vorgesehenen Schaltelementen.

Ein weiterer Unterschied zu der anhand der Figuren 1 bis 5c beschriebenen Anordnung besteht vorliegend darin, dass die Schlingfeder 4, die wiederum am Außenumfang des Übersetzungsmechanismus 3', nämlich am Außenumfang der beiden Hohlräder 25, 30', angeordnet ist, von der zugeordneten ringartigen (hohlzylindrischen) Bremsfläche 24 umfasst wird. Die Bremsfläche 24 ist ausgebildet an einem Bremstopf des inneren, getriebeseitigen Gehäuseteils 2b, beispielsweise in Form eines auf das Gehäuseteil 2b aufgesetzten Blechringes. Dementsprechend ist vorliegend die Schlingfeder 4 radial nach außen vorgespannt und wir bei abtriebsseitiger Einleitung eines Drehmomentes zur Erzeugung der gewünschten Sperrwirkung radial nach außen gegen die zugeordnete Bremsfläche 24 gedrückt. Bei antriebsseitiger Einleitung eines Drehmomentes (ausgehend von dem entsprechenden Scheibenläufer) über das Abtriebshohlrad 30' wird demgegenüber die Schlingfeder 4 an ihren Enden mittels der Schaltklauen 35' des Abtriebshohlrades 30' an ihren Federenden derart betätigt, dass sie radial nach innen von der Bremsfläche 24 abgehoben wird.

Zur Abdichtung des Verstellantriebs (z.B. bei dessen Einsatz in einem Nassraum) dienen vorliegend eine ringförmig umlaufende Dichtlippe DL am Abtriebshohlrad 30', die an dem inneren Gehäuseteil 2b anliegt und dort schleift, sowie ein Dichtring D zwischen Antriebsachse 10 und Abtriebshohlrad 30'.

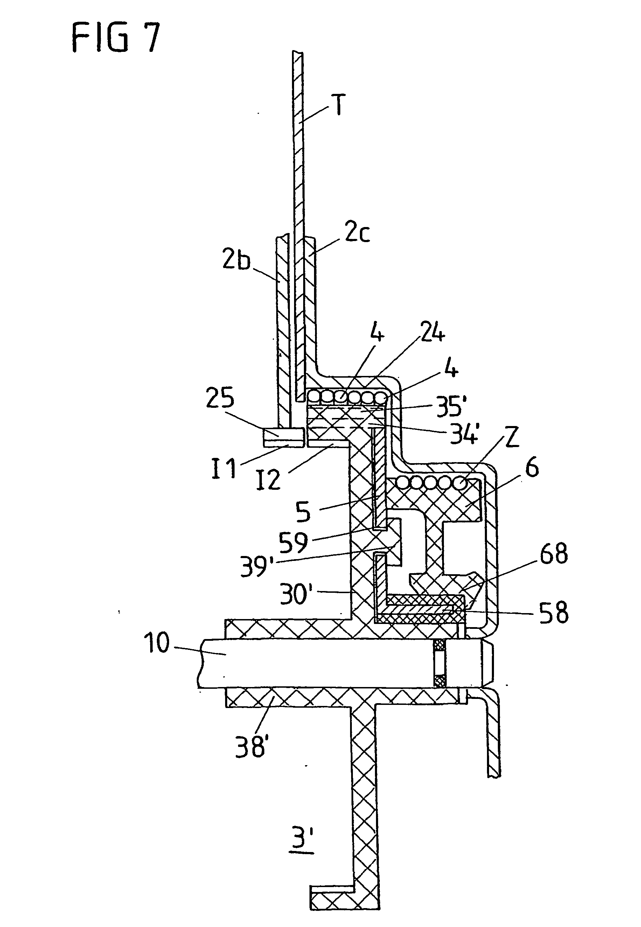

Figur 7 zeigt eine Abwandlung des Verstellantriebs aus Figur 6, wobei der wesentliche Unterschied darin besteht, dass der Bremstopf mit der Bremsfläche 24 für die Schlingfeder 4 nicht am inneren, getriebeseitigen Gehäuseteil 2b, sondern am Lagerdeckel 2c für die Seiltrommel 6 ausgebildet ist. Auch hier umgreift die Bremsfläche 24 die Schlingfeder 4, so dass zur Erzeugung einer Bremswirkung die Schlingfeder 4 radial nach außen aufzuweiten ist.

Es ist ferner erkennbar, dass der Lagerdeckel 6 die Antriebsachse 10 radial abstützt und gemeinsam mit dem inneren Gehäuseteil 2b an einem flächigen Trägerelement T, z. B. in Form eines Trägerbleches einer Kraftfahrzeugtür, befestigt ist. Das Trägerelement T ist dabei zwischen dem inneren Gehäuseteil 2b und einem Befestigungsflansch des Lagerdeckels 2c aufgenommen und dient gleichzeitig zur axialen Sicherung der Schlingfeder 4 in einer axialen Richtung, so dass die Schlingfeder 4 axial zwischen einem Abschnitt des Trägerelementes T und einem Abschnitt des am Lagerdeckel 2c ausgebildeten Bremstopfes festgelegt ist.

In Figur 7 ist ferner ein auf den äußeren Umfang der Seiltrommel 6 gewickeltes Seil erkennbar, das als Zugmittel Z für einen Kraftfahrzeugfensterheber dient und durch Drehung der Seiltrommel in der einen oder anderen Drehrichtung zum Anheben oder Absenken einer Fensterscheibe betätigt wird.

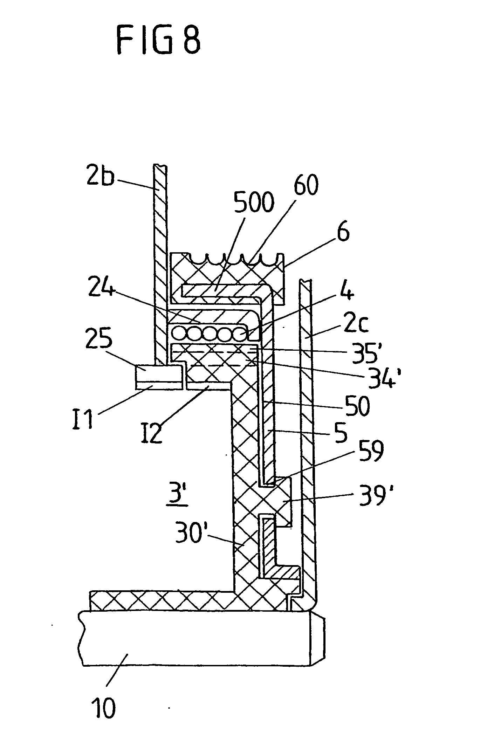

Figur 8 zeigt eine weitere Abwandlung des Verstellantriebs aus Figur 6, wobei der Unterschied darin besteht, dass die Seiltrommel 6 nicht (mittels eines axial von der Abtriebsscheibe 5 abstehenden Formschlusselementes) axial hinter der Abtriebsscheibe 5 angeordnet ist, sondern vielmehr am äußeren Umfang der Abtriebsscheibe 5 (durch Spritzgießen) angespritzt ist, also radial neben dieser liegt und zwar an einem von der Grundfläche 50 der Abtriebsscheibe 5 abstehenden, ringförmig umlaufenden Abschnitt 500. Hierdurch wird eine in axialer Richtung besonders flache Bauweise des Verstellantriebs ermöglicht.

Die anhand der Figuren 6 bis 8 dargestellten Verstellantriebe unterscheiden sich von dem in den Figuren 1a bis 3 gezeigten zwar in der Ausbildung des jeweiligen Übersetzungsmechanismus 3 bzw. 3', der der Übertragung des am Scheibenläufer erzeugten Drehmomentes auf die Abtriebsscheibe 5 dient; jedoch stimmen alle Ausführungsbeispiele darin überein, dass die Schlingfeder 4 der Schlingfederbremse jeweils am äußeren Umfang des Übersetzungsmechanismus 3 bzw. 3' angeordnet ist und die der Übersetzung dienenden drehbaren Getriebeelemente des jeweiligen Übersetzungsmechanismus 3 bzw. 3' umgreift.

## Patentansprüche

1. Verstellantrieb, insbesondere für Kraftfahrzeuge, mit
- einem elektromechanischen Energiewandler, der einen drehbar gelagerten Scheibenläufer (1) zur Erzeugung eines Drehmomentes aufweist,
- einem dem Scheibenläufer (1) nachgeschalteten Übersetzungsmechanismus (3, 3') zur Kopplung des Scheibenläufers (1) mit einem Abtriebselement (5) und
- einem Sperrmechanismus, der eine Bewegung des Abtriebselementes (5) unter der Wirkung eines abtriebsseitig in den Verstellantrieb eingeleiteten Drehmomentes sperrt,
**dadurch gekennzeichnet,**
**dass** der Übersetzungsmechanismus (3, 3') und der Scheibenläufer 1 coaxial zueinander entlang einer Achse (10) angeordnet sind und dass der Sperrmechanismus eine Schlingfeder (4) aufweist, die sich am äußeren Umfang des Übersetzungsmechanismus (3, 3') und/oder des Scheibenläufers (1) erstreckt.

2. Verstellantrieb nach Anspruch 1, **dadurch gekennzeichnet, dass** zumindest ein Teil der Getriebeelemente (30a, 30b, 31, 33; 25, 30') des Übersetzungsmechanismus (3, 3') koaxial zu dem Scheibenläufer (1) gelagert ist.

3. Verstellantrieb nach einem der vorhergehenden Ansprüche, **dadurch gekennzeichnet, dass** die Schlingfeder (4) den Übersetzungsmechanismus (3, 3') und/oder den Scheibenläufer (1) in einer Ebene senkrecht zur Achse (10) des Scheibenläufers (1) umgreift.

4. Verstellantrieb nach einem der vorhergehenden Ansprüche, **dadurch gekennzeichnet, dass** die beweglichen, der Übersetzung dienenden Getriebeelemente (30a, 30b, 30', 31, 32, 33, 34) des Übersetzungsmechanismus (3, 3') radial nicht über die Schlingfeder (4) hinausragen.

5. Verstellantrieb nach einem der vorhergehenden Ansprüche, **dadurch gekennzeichnet, dass** die Schlingfeder (4) zum Sperren eines abtriebsseitig eingeleiteten Drehmomentes radial gegen eine ringartige Bremsfläche (24) drückbar ist

6. Verstellantrieb nach einem der vorhergehenden Ansprüche, **dadurch gekennzeichnet, dass** die ringartige Bremsfläche (24) an einem Gehäuseteil (2b) für den Verstellantrieb ausgebildet oder angeordnet ist

7. Verstellantrieb nach einem der vorhergehenden Ansprüche, **dadurch gekennzeichnet, dass** die Schlingfeder (4) zwischen einem abtriebsseitigen Getriebeelement (30b, 30') des Übersetzungsmechanismus (3, 3') und dem Abtriebselement (5) wirkend angeordnet ist, wobei mit dem abtriebsseitigen Getriebeelement (30b, 30') oder dem Abtriebselement (5) verbundene Bauteile (35, 36; 35'; 55a, 56b) durch Einwirkung auf die Schlingfeder (4), insbesondere deren Federenden (41, 42), die Schlingfeder (4) aufweiten oder zusammendrücken.

8. Verstellantrieb nach einem der vorhergehenden Ansprüche, **dadurch gekennzeichnet, dass** das Abtriebselement (5) die Schlingfeder (4) topfartig umgibt

9. Verstellantrieb nach einem der vorhergehenden Ansprüche, **dadurch gekennzeichnet, dass** die Schlingfeder (4) zu ihrer Betätigung zwei abgewinkelte Federenden (41, 42) aufweist.

10. Verstellantrieb nach einem der vorhergehenden Ansprüche, **dadurch gekennzeichnet, dass** die Federenden (41, 42) jeweils mit einem Schaltelement (43, 44) versehen sind, dem eine radiale Führung (53, 54) und vorzugsweise eine axiale Führung (26, 41, 42) zugeordnet ist, mit der es bei einer Betätigung der Schlingfeder (4) führbar ist, und dass die Federenden (41, 42) in radial gerichtete Aufnahmeöffnungen des jeweiligen Schaltelementes (43, 44) einsteckbar sind.

11. Verstellantrieb nach einem der vorhergehenden Ansprüche, **dadurch gekennzeichnet, dass** die Schlingfeder (4) in Richtung auf ihren gesperrten Zustand vorgespannt ist.

12. Verstellantrieb nach einem der vorhergehenden Ansprüche, **dadurch gekennzeichnet, dass** der Übersetzungsmechanismus (3, 3') bei der antriebsseitigen Einleitung eines Drehmomentes auf die Schlingfeder (4) einwirkt und diese derart betätigt, dass sie eine Übertragung des Drehmomentes auf die Abtriebsseite nicht blockiert.

13. Verstellantrieb nach einem der vorhergehenden Ansprüche, **dadurch gekennzeichnet, dass** der Übersetzungsmechanismus (3, 3') bei antriebsseitiger Einleitung eines Drehmomentes über mindestens ein Federende (41, 42) der Schlingfeder (4) auf das Abtriebselement (5) einwirkt.

14. Verstellantrieb nach einem der vorhergehenden Ansprüche, **dadurch gekennzeichnet, dass** der Übersetzungsmechanismus (3, 3') bei antriebsseitiger Einleitung eines Drehmomentes über mindestens ein Dämpfungselement (45a, 45b; 46a, 46b) auf das Abtriebselement (5) einwirkt.

15. Verstellantrieb nach Anspruch 13 oder 14, **dadurch gekennzeichnet, dass** zwischen den Federenden (41, 42) der Schlingfeder (4) und dem Abtriebselement (5) Dämpfungselemente (45a, 46b) angeordnet sind.

16. Verstellantrieb nach Anspruch 14 oder 15, **dadurch gekennzeichnet, dass** mindestens ein Dämpfungselement (45a, 45b, 46a, 46b) beim Einwirken des Übertragungsmechanismus (3, 3') auf das Abtriebselement (5) deformiert wird.

17. Verstellantrieb nach Anspruch 16, **dadurch gekennzeichnet, dass** nach Entspannung des deformierten Dämpfungselementes (45a, 46a, 45b, 46b) bis zum Sperren der Schlingfeder (4) ein Restumkehrspiel des Sperrmechanismus besteht.

18. Verstellantrieb nach einem der vorhergehenden Ansprüche, **dadurch gekennzeichnet, dass** durch axiales und/oder radiales reibendes Zusammenwirken des Übersetzungsmechanismus (3, 3') mit dem Abtriebselement (5) ein Dämpfungseffekt erzielt wird, wenn das Abtriebselement (5) an einen Block gefahren wird.

19. Verstellantrieb nach Anspruch 18, **dadurch gekennzeichnet, dass** ein Getriebeelement (30b, 30') des Übersetzungsmechanismus (3, 3') mit dem Abtriebselement (5) keilartig zusammenwirkt.

20. Verstellantrieb nach einem der Ansprüche 14 bis 17 und Anspruch 18, **dadurch gekennzeichnet, dass** ein Getriebeelement (30b, 30') des Übersetzungsmechanismus (3, 3') und das Abtriebselement (5) über die Dämpfungselemente (45a, 45b, 46a, 46b) axial gegeneinander verspannt sind.

21. Verstellantrieb nach einem der vorhergehenden Ansprüche, **dadurch gekennzeichnet, dass** das abtriebsseitige Getriebeelement (30b, 30') des Übersetzungsmechanismus (3, 3') und das Abtriebselement (5) axial aneinander gelagert sind.

22. Verstellantrieb nach Anspruch 21, **dadurch gekennzeichnet, dass** die axiale Lagerung durch Eingriff in einen Hinterschnitt (52) erfolgt.

23. Verstellantrieb nach Anspruch 21 oder 22, **dadurch gekennzeichnet, dass** das abtriebsseitige Getriebeelement (30b, 30') und das Abtriebselement (5) nach Art eines Bajonettverschlusses axial zueinander fixierbar sind.

24. Verstellantrieb nach einem der vorhergehenden Ansprüche, **dadurch gekennzeichnet, dass** der Übersetzungsmechanismus (3, 3') durch ein Umlaufrädergetriebe gebildet wird.

25. Verstellantrieb nach einem der vorhergehenden Ansprüche, **dadurch gekennzeichnet, dass** der Übersetzungsmechanismus (3, 3') durch ein Planetengetriebe (3) oder durch ein Übersetzungsgetriebe (3') mit zwei koaxialen, zueinander verdrehbaren Hohlrädern (25, 30') mit Innenverzahnungen (I1, I2) unterschiedlicher Zähnezahl gebildet wird.

26. Verstellantrieb nach einem der vorhergehenden Ansprüche, **dadurch gekennzeichnet, dass** auf der Achse (10) des Scheibenläufers (1) ein axial feststehendes axiales Sicherungselement (11) zwischen dem Scheibenläufer (1) und dem Abtriebselement (5) angeordnet ist, so dass abtriebsseitig eingeleitete axial wirkende Kräfte von dem Sicherungselement (11) aufgenommen werden und nicht auf den Scheibenläufer (1) einwirken.

27. Verstellantrieb nach einem der vorhergehenden Ansprüche, **dadurch gekennzeichnet, dass** beim Abschalten des Verstellantriebs der elektromechanische Wandler kurzgeschlossen wird, während die Schlingfeder (4) in einen Zustand überführt wird, in dem sie sperrend an einer Bremsfläche (24) des Verstellantriebs anliegt.

28. Verstellantrieb nach einem der vorhergehenden Ansprüche, **dadurch gekennzeichnet, dass** der Verstellantrieb ein mehrteiliges Gehäuse aufweist, dessen Gehäuseteile (2a, 2b, 2c) ein Referenzpunktsystem für die gegenseitige Ausrichtung aufweisen.

29. Verstellantrieb nach einem der vorhergehenden Ansprüche, **dadurch gekennzeichnet, dass** die Achse (10) des Scheibenläufers (1) abtriebsseitig durch ein Gehäuseteil (2c), insbesondere in Form eines Lagerdeckels, radial abgestützt ist.

30. Verstetlantrieb nach einem der vorhergehenden Ansprüche, **dadurch gekennzeichnet, dass** der Scheibenläufer eine Mehrzahl zu bestromender, elektrisch leitender Wicklungen aufweist, denen zur Drehmomenterzeugung ortsfest angeordnete Magnete (22) zugeordnet sind, und dass die Magnete (22) zumindest abschnittsweise in ihrer äußeren Kontur (22b) an den Verlauf einer Wicklung (W1, W2) in der Ebene des Scheibenläufers (1) angepasst sind.

31. Verstellantrieb nach Anspruch 30, **dadurch gekennzeichnet, dass** der in seiner Kontur (22b) an den Verlauf der Wicklungen (W1, W2) angepasste Abschnitt (22b) des jeweiligen Magneten (22) kreisbogenförmig ausgebildet ist.

32. Verstellantrieb nach Anspruch 31, **dadurch gekennzeichnet, dass** die äußere Kontur der Magnete (22) durch zwei kreisbogenförmige Abschnitte (22a, 22b) gebildet wird, wobei ein kreisbogenförmiger Abschnitt (22b) an den Verlauf einer gleichsinnig stromdurchflossenen Wicklung (W1, W2) des Scheibenläufers (1) angepasst ist und der andere Abschnitt (22a) die Magnete (22) radial nach innen, bezogen auf die Achse (10) des Scheibenläufers (1), begrenzt.

33. Verstellantrieb nach Anspruch 32, **dadurch gekennzeichnet, dass** der eine kreisbogenförmige Abschnitt (22b) des jeweiligen Magneten (22) einen kleineren Radius (R2) aufweist als der andere kreisbogenförmigen Abschnitt (22a).

## Claims

1. Servo drive more particularly for motor vehicles with
- an electromechanical energy converter which has a rotatably mounted disc rotor (1) for generating a torque;
- a stepping up mechanism (3, 3') on the output side of the disc rotor (1) for coupling the disc rotor (1) to an output element (5) and
- a locking mechanism which locks a movement of the output element (5) under the action of a torque introduced on the output side into the servo drive
**characterised in that**
the stepping up mechanism (3, 3') and the disc rotor 1 are mounted coaxial relative to each other along an axis (10) and that the locking mechanism has a coil spring (4) which extends on the outer circumference of the stepping up mechanism (3, 3') and/or disc rotor (1).

2. Servo drive according to claim 1, **characterised in that** at least a part of the gear elements (30a, 30b, 31, 33; 25, 30') of the stepping up mechanism (3, 3') is mounted coaxial with the disc rotor (1).

3. Servo drive according to one of the preceding claims, **characterised in that** the coil spring (4) engages round the stepping up mechanism (3, 3') and/or the disc rotor (1) in a plane perpendicular to the axis (10) of the disc rotor (1).

4. Servo drive according to one of the preceding claims, **characterised in that** the movable gear elements (30a, 30b, 30', 31, 32, 33, 34) of the stepping up mechanism (3, 3') serving for stepping up do not radially project over the coil spring (4).

5. Servo drive according to one of the preceding claims, **characterised in that** the coil spring (4) for blocking torque introduced on the output side can be pressed radially against a ring-type brake surface (24).

6. Servo drive according to one of the preceding claims, **characterised in that** the ring type brake surface (24) is mounted or formed on a housing part (2b) for the servo drive.

7. Servo drive according to one of the preceding claims, **characterised in that** the coil spring (4) is mounted to act between a gear element (30b, 30') on the output side of the stepping up mechanism (3,3') and the output element (5) whereby component parts (35, 36; 35', 55a, 56b) connected to the gear element (30b, 30') on the output side or to the output element (5) by acting on the coil spring (4), more particularly its spring ends (41, 42) widen out or compress the coil spring (4).

8. Servo drive according to one of the preceding claims, **characterised in that** the output element (5) surrounds the coil spring (4) pot-shaped.

9. Servo drive according to one of the preceding claims, **characterised in that** the coil spring (4) has two angled spring ends (41, 42) for its actuation.

10. Servo drive according to one of the preceding claims, **characterised in that** the spring ends (41, 42) are each provided with a shift element (43, 44) which is assigned a radial guide (53, 54) and preferably an axial guide (26, 41, 42) with which it can be guided during actuation of the coil spring (4) and that the spring ends (41, 42) can be inserted in radially directed socket openings of the relevant shift element (43, 44).

11. Servo drive according to one of the preceding claims, **characterised in that** the coil spring (4) is pretensioned in the direction of its blocked state.

12. Servo drive according to one of the preceding claims, **characterised in that** the stepping up mechanism (3, 3') with the introduction of torque on the drive side acts on the coil spring (4) and actuates this so that it does not block transfer of torque to the output side.

13. Servo drive according to one of the preceding claims, **characterised in that** the stepping up mechanism (3, 3') with the introduction of torque on the drive side acts through at least one spring end (41, 42) of the coil spring (4) on the output element (5).

14. Servo drive according to one of the preceding claims, **characterised in that** the stepping up mechanism (3, 3') with the introduction of torque on the drive side acts through at least one damping element (45a; 45b, 46a, 46b) on the output element (5).

15. Servo drive according to claim 13 or 14, **characterised in that** between the spring ends (41, 42) of the coil spring (4) and the output element (5) are damping elements (45a, 46b).

16. Servo drive according to claim 14 or 15, **characterised in that** at least one damping element (45a, 45b, 46a, 46b) is deformed when the stepping up mechanism (3, 3') acts on the output element (5).

17. Servo drive according to claim 16, **characterised in that** after relaxation of the deformed damping element (45a, 46a, 45b, 46b) a residual reverse play of the locking mechanism exists until the coil spring (4) is locked.

18. Servo drive according to one of the preceding claims, **characterised in that** through axial and/or radial friction interaction of the stepping up mechanism (3, 3') with the output element (5) a damping effect is achieved when the output element (5) becomes blocked.

19. Servo drive according to claim 18, **characterised in that** a gear element (30b, 30') of the stepping up mechanism (3, 3') interacts wedge like with the output element (5).

20. Servo drive according to one of claims 14 to 17 and claim 20, **characterised in that** a gear element (30b, 30') of the stepping up mechanism (3, 3') and the output element (5) are tensioned axially against each other through the damping elements (45a, 45b, 46a, 46b).

21. Servo drive according to one of the preceding claims, **characterised in that** the gear element (30b, 30') on the output side of the stepping up mechanism (3, 3') and the output element (5) are mounted axially against one another.

22. Servo drive according to claim 21, **characterised in that** the axial bearing is through engagement in an undercut section (52).

23. Servo drive according to claim 21 or 22, **characterised in that** the gear element (30b, 30') on the output side and the output element (5) can be fixed axially relative to each other in the manner of a bayonet lock.

24. Servo drive according to one of the preceding claims, **characterised in that** the stepping up mechanism (3, 3') is formed through a revolving wheel gear.

25. Servo drive according to one of the preceding claims, **characterised in that** the stepping up mechanism (3,3') is formed through a planetary gearing (3) or through a stepping up gear (3') with two coaxial relatively rotatable hollow wheels (25, 30') with internal toothings (i1, i2) with different number of teeth.

26. Servo drive according to one of the preceding claims, **characterised in that** on the axis (10) of the disc rotor (1) is an axially fixed axial securing element (11) mounted between the disc rotor (1) and the output element (5) so that axially acting forces introduced on the output side are taken up by the securing element (11) and do not act on the disc rotor (1).

27. Servo drive according to one of the preceding claims, **characterised in that** when switching off the servo drive the electromechanical converter is short circuited whilst the coil spring (4) is moved into a state in which it adjoins with locking action on the brake face (24) of the servo drive.

28. Servo drive according to one of the preceding claims, **characterised in that** the servo drive has a multi-part housing whose housing parts (2a, 2b, 2c) have a reference point system for the mutual alignment.

29. Servo drive according to one of the preceding claims, **characterised in that** the axis (10) of the disc rotor (1) is supported radially on the output side through a housing part (2c), more particularly in the form of a bearing cover.

30. Servo drive according to one of the preceding claims, **characterised in that** the disc rotor has a number of electrically conductive windings which are to be energised and which are associated with magnets (22) mounted locally fixed for generating torque, and that the magnets (22) are adapted at least in sections in their outer contour (22b) to the path of a winding (W1, W2) in the plane of the disc rotor (1).

31. Servo drive according to claim 30, **characterised in that** the section (22b) of the relevant magnet (22) adapted in its contour (22b) to the path of the windings (W1, W2) is designed in a circular arc.

32. Servo drive according to claim 31, **characterised in that** the outer contour of the magnets (22) is formed by two circular arc sections (22a, 22b) whereby one circular arc section (22b) is adapted to the path of a winding (W1, W2) of the disc rotor (1) which has current flowing through in the same direction, and the other section (22a) restricts the magnets (22) radially inwards in relation to the axis (10) of the disc rotor (1).

33. Servo drive according to claim 32, **characterised in that** the one circular arc section (22b) of the relevant magnet (22) has a smaller radius (R2) than the other circular arc section (22a).

## Revendications

1. Entraînement, en particulier pour véhicules automobiles doté
- d'un convertisseur d'énergie électromécanique qui présente un rotor en disque (1), monté rotatif, destiné à produire un moment de rotation,
- d'un mécanisme de changement de rapport (3, 3'), monté en aval du rotor en disque (1), destiné à coupler le rotor en disque (1) avec un élément de sortie (5), et
- d'un mécanisme de blocage,qui bloque un mouvement de l'élément de sortie (5), sous l'effet d'un moment de rotation appliqué à l'entraînement du coté sortie,
**caractérisé en ce que**
le mécanisme de changement de rapport (3, 3') et le rotor en disque (1) sont disposés coaxialement le long d'un axe (10), et que le mécanisme de blocage présente un ressort cylindrique de torsion (4), qui s'étend sur la circonférence extérieure du mécanisme de changement de rapport (3, 3') et/ou du rotor en disque (1).

2. Entraînement selon la revendication 1, **caractérisé en ce qu'**au moins une partie des éléments de transmission (30a, 30b, 31, 33, 25, 30') du mécanisme de changement de rapport (3, 3') est montée coaxialement au rotor en disque (1).

3. Entraînement selon l'une des revendications précédentes, **caractérisé en ce que** le ressort cylindrique de torsion (4) enserre le mécanisme de changement de rapport (3, 3') et/ou le rotor en disque (1), dans un plan perpendiculaire à l'axe (10) du rotor en disque (1).

4. Entraînement selon l'une des revendications précédentes, **caractérisé en ce que** les éléments de transmission mobiles (30a, 30b, 30', 31, 32, 33, 34) du mécanisme de changement de rapport (3, 3'), servant au changement de rapport, ne dépassent pas radialement du ressort cylindrique de torsion (4).

5. Entraînement selon l'une des revendications précédentes, **caractérisé en ce que** le ressort cylindrique de torsion (4) peut être poussé radialement contre une surface de freinage (24) de type annulaire, afin de bloquer un moment de rotation appliqué du coté sortie.

6. Entraînement selon l'une des revendications précédentes, **caractérisé en ce que** la surface de freinage de type annulaire (24) et formée ou disposée sur une partie (2b) du boîtier de l'entraînement.

7. Entraînement selon l'une des revendications précédentes, **caractérisé en ce que** le ressort cylindrique de torsion (4) est disposé pour agir entre un élément de transmission (30b, 30') coté sortie, du mécanisme de changement de rapport (3, 3'), et l'élément de sortie (5), des composants (35, 36, 35', 55a, 56b) reliés aux éléments de transmission (30b, 30') coté sortie ou à l'élément de sortie (5) étirant ou comprimant le ressort cylindrique de torsion (4), en agissant sur ledit ressort cylindrique de torsion (4), en particulier sur ses extrémités (41, 42).

8. Entraînement selon l'une des revendications précédentes, **caractérisé en ce que** l'élément de sortie (5) enveloppe le ressort cylindrique de torsion (4) comme une coupelle.

9. Entraînement selon l'une des revendications précédentes, **caractérisé en ce que** le ressort cylindrique de torsion (4) présente deux extrémités repliées (41, 42) pour son actionnement.

10. Entraînement selon l'une des revendications précédentes, **caractérisé en ce que** les extrémités de ressort (41, 42) sont chacune dotées d'un élément de couplage (43, 44), auquel un guidage radial (53, 54) et de préférence un guidage axial (26, 41, 42) est attribué, par lequel, lors de l'actionnement du ressort cylindrique de torsion (4), ledit élément de couplage peut être guidé
et **en ce que** les extrémités de ressort (41, 42) peuvent s'introduire dans des orifices de positionnement de chacun des éléments de couplage (43, 44).

11. Entraînement selon l'une des revendications précédentes, **caractérisé en ce que** le ressort cylindrique de torsion (4) est précontraint en direction de son état bloqué.

12. Entraînement selon l'une des revendications précédentes, **caractérisé en ce que,** lors de l'application d'un moment de rotation du coté commande, le mécanisme de changement de rapport (3, 3') agit sur le ressort cylindrique de torsion (4), et actionne celui-ci de telle sorte qu'il ne bloque pas la transmission du moment de rotation vers le coté sortie.

13. Entraînement selon l'une des revendications précédentes, **caractérisé en ce que**, lors de l'apparition d'un moment de rotation du coté commande, le mécanisme de changement de rapport (3, 3') agit sur l'élément de sortie (5), par l'intermédiaire d'au moins une extrémité de ressort (41, 42) du ressort cylindrique de torsion (4).

14. Entraînement selon l'une des revendications précédentes, **caractérisé en ce que**, lors de l'apparition d'un moment de rotation du coté commande, le mécanisme de changement de rapport (3, 3') agit sur l'élément de sortie (5), par l'intermédiaire d'au moins un élément amortisseur (45a, 45b, 46a, 46b).

15. Entraînement selon la revendication 13 ou 14 **caractérisé en ce que** des éléments amortisseurs (45a, 46b) sont disposés entre les extrémités de ressort (41, 42) du ressort cylindrique de torsion (4) et l'élément de sortie (5).

16. Entraînement selon la revendication 14 ou 15 **caractérisé en ce qu'**au moins un élément amortisseurs (45a, 45b, 46a, 46b) est déformé lors de l'action du mécanisme de changement de rapport (3, 3') sur l'élément de sortie (5).

17. Entraînement selon la revendication 16 **caractérisé en ce qu'**après la détente de l'élément amortisseur (45a, 45b, 46a, 46b) déformé, jusqu'au blocage du ressort cylindrique de torsion (4), un jeu résiduel d'inversion du mécanisme de blocage existe.

18. Entraînement selon l'une des revendications précédentes, **caractérisé en ce qu'**un effet d'amortissement est obtenu par la coopération par frottements axial et/ou radial entre le mécanisme de changement de rapport (3, 3') et l'élément de sortie (5), quand l'élément de sortie (5) est amené contre une butée.

19. Entraînement selon la revendication 18 **caractérisé en ce qu'**un élément de transmission (30b, 30') du mécanisme de changement de rapport (3, 3') coopère à la manière d'une cale avec l'élément de sortie (5).

20. Entraînement selon l'une des revendications 14 à 17 et selon la revendication 18, **caractérisé en ce qu'**un élément de transmission (30b, 30') du mécanisme de changement de rapport (3, 3') et l'élément de sortie (5) sont axialement maintenus l'un contre l'autre par l'intermédiaire des éléments amortisseurs (45a, 45b, 46a, 46b).

21. Entraînement selon l'une des revendications précédentes, **caractérisé en ce que** l'élément de transmission (30b, 30') coté sortie du mécanisme de changement de rapport (3, 3') et l'élément de sortie (5) sont disposés coaxiaux.

22. Entraînement selon la revendication 21 **caractérisé en ce que** le positionnement axial est réalisé par engagement dans une contre-dépouille (52).

23. Entraînement selon la revendication 21 ou 22 **caractérisé en ce que** l'élément de transmission coté sortie (30b, 30') et l'élément de sortie (5) peuvent être fixé axialement l'un à l'autre à la manière d'un emboîtement à baïonnette.

24. Entraînement selon l'une des revendications précédentes, **caractérisé en ce que** le mécanisme de changement de rapport (3, 3') est formé d'un train épicycloïdal.

25. Entraînement selon l'une des revendications précédentes, **caractérisé en ce que** le mécanisme de changement de rapport (3, 3') est formé d'un engrenage planétaire (3) ou d'une transmission à changement de rapport (3') doté de deux couronnes tournantes (25, 30') coaxiales, avec des dentures intérieures (i1, i2) à nombre de dents distinct.

26. Entraînement selon l'une des revendications précédentes, **caractérisé en ce qu'**un élément (11) de sécurité axiale, fixé axialement, est disposé sur l'axe (10) du rotor en disque (1), entre le rotor en disque (1) et l'élément de sortie (5), de sorte que des forces appliquées coté sortie, agissant axialement, sont absorbées par l'élément de sécurité (11) et n'agissent pas sur le rotor en disque (1).

27. Entraînement selon l'une des revendications précédentes, **caractérisé en ce que** lors de la coupure de l'entraînement, le convertisseur électromécanique est court-circuité, tandis que le ressort cylindrique de torsion (4) est amené dans un état où il est en contact bloquant avec une surface de freinage (24) de l'entraînement.

28. Entraînement selon l'une des revendications précédentes, **caractérisé en ce que** l'entraînement présente un boîtier fait de plusieurs pièces, dont les parties (2a, 2b, 2c) présentent un système de points de référence pour leur alignement.

29. Entraînement selon l'une des revendications précédentes, **caractérisé en ce que** l'axe (10) du rotor en disque (1) est supporté radialement coté sortie par une pièce (2c) du carter, en particulier sous la forme d'un chapeau de palier.

30. Entraînement selon l'une des revendications précédentes, **caractérisé en ce que** le rotor en disque présente plusieurs enroulements de conducteurs électriques à alimenter en courant, auxquels sont affectés des aimants (22), disposés fixes, pour la génération d'un moment de rotation et **en ce que** les aimants (22) dans au moins une section de leur contour extérieur (22b) sont adaptés au profil d'un enroulement (W1, W2) dans le plan du rotor en disque (1).

31. Entraînement réglable selon la revendication 30 **caractérisé en ce que** la section (22b) de chacun des aimants, dont le contour est adapté au profil des enroulements (W1, W2) a la forme d'un arc de cercle.

32. Entraînement réglable selon la revendication 31 **caractérisé en ce que** le contour extérieur des aimants (22) est formé de deux sections (22a, 22b) d'arc de cercle, une section (22b) en arc de cercle étant adaptée au profil d'un enroulement (W1, W2) du rotor en disque (1) parcouru par le courant dans le même sens et l'autre section (22a) limite les aimants (22) radialement vers l'intérieur par rapport à l'axe (10) du rotor en disque (1).

33. Entraînement réglable selon la revendication 32 **caractérisé en ce que** l'une des section (22b) en arc de cercle de chacun des aimants (22) présente un rayon (R2) inférieur à celui de l'autre section (22a) en arc de cercle.
